# EUROPÄISCHE PATENTSCHRIFT

(11) **EP 3 622 930 B1**
(45) Veröffentlichungstag und Bekanntmachung des Hinweises auf die Patenterteilung: **09.06.2021**
(21) Anmeldenummer: 19189278.5
(22) Anmeldetag: 31.07.2019
(51) Int. Cl.: A61G 5/04, A61G 5/10

(54) **HILFSANTRIEBSVORRICHTUNG FÜR EINEN ROLLSTUHL**
AUXILIARY DRIVE DEVICE FOR A WHEELCHAIR
DISPOSITIF D'ENTRAÎNEMENT AUXILIAIRE POUR FAUTEUIL ROULANT

(30) Priorität: 13.09.2018 DE 102018122360
(43) Veröffentlichungstag der Anmeldung: 18.03.2020
(73) Patentinhaber: Alber GmbH, 72461 Albstadt-Tailfingen (DE)
(72) Erfinder: Menig, Joachim, 72406 Bisingen (DE)
(74) Vertreter: Staudt, Hans-Peter

(56) Entgegenhaltungen:
- WO-A1-2017/158504
- US-A- 4 759 418
- US-A- 5 291 959
- US-A1- 2013 240 271

## Beschreibung

Die Erfindung betrifft eine Hilfsantriebsvorrichtung für einen Rollstuhl.

Rollstühle können grundsätzlich in zwei Kategorien eingeteilt werden, nämlich einerseits Rollstühle, die in erster Linie für manuellen Antrieb ausgelegt sind, das heißt entweder durch die im Rollstuhl sitzende Person von Hand angetrieben werden, beispielsweise über Greifringe, die an großen Hinterrädern des Rollstuhls angebracht werden oder durch eine den Rollstuhl schiebende Hilfsperson, und andererseits solche Rollstühle, die von ihrer Konzeption her bereits für einen elektrischen Antrieb ausgelegt sind.

Manuell antreibbare Rollstühle zeichnen sich in der Regel durch ein deutlich geringeres Gewicht aus als solche Rollstühle, bei denen ein elektrischer Antrieb fest verbaut ist. Zudem sind manuelle Rollstühle oftmals als sogenannte Faltrollstühle ausgeführt, die sich nicht nur aufgrund ihres geringeren Gewichts, sondern auch wegen ihrer im zusammengeklappten Zustand geringeren Abmessungen leicht transportieren lassen, beispielsweise im Kofferraum eines Personenkraftwagens.

Manuell antreibbare Rollstühle haben dann, wenn der Antrieb durch die im Rollstuhl sitzende Person erfolgt, einen therapeutischen Effekt, da das Aufbringen der Antriebsleistung eine wertvolle körperliche Übung darstellen kann. Andererseits kommen Rollstuhlfahrer beim manuellen Antreiben eines Rollstuhls, insbesondere bei der Bewältigung von Steigungen, in unwegsamem Gelände oder auf längeren Wegstrecken, mitunter schnell an die Grenzen ihrer physischen Leistungsfähigkeit. Zudem kann ein fortgesetzter, langjähriger Gebrauch eines manuell angetriebenen Rollstuhls zu Verletzungen durch wiederholte hohe Belastung und zu vorzeitigen Verschleißerscheinungen in Muskeln, Sehnen und Gelenken führen. Aus diesen Gründen sind Hilfsantriebe für Rollstühle entwickelt worden, die, wenn an einem manuell antreibbaren Rollstuhl nachträglich angebracht, den Benutzer bei der Fortbewegung dieses Rollstuhls unterstützen.

Eine derartige Hilfsantriebsvorrichtung für einen Rollstuhl kann beispielsweise bereitgestellt werden durch Austausch der beiden großen Hinterräder des Rollstuhls durch solche Hinterräder, in die ein Nabenmotor integriert ist. Eine solche Hilfsantriebsvorrichtung für einen Rollstuhl ist beispielsweise in der DE 197 48 201 C1 offenbart.

Die US 2014/0262575 A1 zeigt eine andere Art Hilfsantriebsvorrichtung für einen Rollstuhl, nämlich eine solche, die ein zusätzliches elektrisch antreibbares Antriebsrad aufweist, das heißt ein Antriebsrad, das nicht gegen ein Rad eines Rollstuhls ausgetauscht wird, sondern Teil einer separaten Vorrichtung ist, die zudem einen Ankoppelungsmechanismus zur Ankoppelung der Hilfsantriebsvorrichtung an den Rollstuhl aufweist.

Ein Ankoppelungsmechanismus zur Ankoppelung einer derartigen Hilfsantriebsvorrichtung an einen Rollstuhl muss eine sichere Koppelung gewährleisten. Zudem sollte das Ankoppeln und Abkoppeln leicht durchführbar sein und die Koppelung sollte vorzugsweise zum Überwinden von Hindernissen wie einem Bordstein ein sogenanntes Ankippen des Rollstuhls ermöglichen, das heißt ein Anheben der Vorderräder.

Bei der aus der US 2014/0262575 A1 bekannten gattungsgemäßen Hilfsantriebsvorrichtung ist der Ankoppelungsmechanismus ohne eine spezielle Verriegelung ausgeführt. Diese bekannte Hilfsantriebsvorrichtung wird lediglich in einer ersten, im Wesentlichen parallel zu der Bodenfläche, auf der der Rollstuhl steht, ausgerichteten Stellung in einen am Rollstuhl angebrachten Verbindungszapfen eingehängt und dann mit dem Antriebsrad auf die Bodenfläche abgesenkt, wobei in dieser abgesenkten Betriebsstellung eine formschlüssige Fixierung gegeben ist. Wenn jedoch die Hilfsantriebsvorrichtung während des Betriebs, beispielsweise durch eine Fahrbahnunebenheit, gegenüber dem Rollstuhl nach oben verschwenkt, dann ist dieser Formschluss aufgehoben. Eine sichere Fixierung ist somit nicht gewährleistet. Eine weitere Hilfsantriebsvorrichtung ist bekannt aus US5291959.

Der Erfindung liegt die Aufgabe zugrunde, eine Hilfsantriebsvorrichtung gemäß dem Oberbegriff des Patentanspruchs 1 so auszuführen, dass eine sichere Koppelung gewährleisten ist und zudem das Ankoppeln und Abkoppeln leicht durchführbar sind.

Gelöst wird diese Aufgabe durch eine Hilfsantriebsvorrichtung für einen Rollstuhl mit den Merkmalen des Patentanspruchs 1. Vorteilhafte Ausgestaltungen sind Gegenstand der abhängigen Patentansprüche. Es wird darauf hingewiesen, dass die in den Patentansprüchen einzeln aufgeführten Merkmale auch in beliebiger und technologisch sinnvoller Weise miteinander kombiniert werden können und somit weitere Ausgestaltungen der Erfindung aufzeigen.

Die erfindungsgemäße Hilfsantriebsvorrichtung weist einen Ankoppelungsmechanismus auf, der durch die Bereitstellung eines in dem Ankoppelungsmechanismus bewegbar gelagerten Verriegelungselements, das eine Verriegelungsstellung einnehmen kann, in der es eine formschlüssige Verriegelung bewirkt, eine im Betrieb sichere Verriegelung gewährleistet. Diese sichere Verriegelung ist unabhängig von der Ausrichtung der Hilfsantriebsvorrichtung zu dem Rollstuhl gewährleistet, da sie durch die Bewegung des Verriegelungselements innerhalb des Ankoppelungsmechanismus bewirkt wird. Zudem ist das Ankoppeln und Abkoppeln leicht durchführbar, da das in dem Ankoppelungsmechanismus bewegbar gelagerte Verriegelungselement durch Betätigung eines Handgriffs in eine Entriegelungsstellung bewegbar ist.

Die Erfindung sowie das technische Umfeld werden nachfolgend anhand der Figuren näher erläutert. Es ist darauf hinzuweisen, dass die Figuren besonders bevorzugte Ausführungsvarianten der Erfindung zeigen. Die Erfindung ist jedoch nicht auf die gezeigten Ausführungsvarianten beschränkt. Insbesondere umfasst die Erfindung, soweit es technisch sinnvoll ist, beliebige Kombinationen der technischen Merkmale, die in den Ansprüchen aufgeführt oder in der Beschreibung als erfindungsrelevant beschrieben sind.

Es versteht sich zudem, dass das in Verbindung mit beispielhaften Ausführungsformen der Erfindung nachfolgend im Zusammenhang mit den Figuren beschriebene technische Umfeld lediglich als Beispiel dient und die in den Patentansprüchen definierte Erfindung nicht einschränkt.

Es zeigen:
Fig. 1 eine perspektivische Darstellung einer ersten Ausführungsform einer erfindungsgemäßen Hilfsantriebsvorrichtung für einen Rollstuhl, die an eine Achse eines Rollstuhls angekoppelt ist,
Fig. 2 eine Seitenansicht der Hilfsantriebsvorrichtung gemäß Fig. 1, wobei Teile des Rollstuhls in der Darstellung weggelassen sind,
Fig. 3A eine perspektivische, teilweise aufgeschnittene Darstellung einer weiteren Ausführungsform einer erfindungsgemäßen Hilfsantriebsvorrichtung für einen Rollstuhl, wobei sich das Antriebsrad der Hilfsantriebsvorrichtung in einer Geradeaus-Vorwärtsfahrt-Stellung befindet,
Fig. 3B eine weitere perspektivische, teilweise aufgeschnittene Darstellung der Hilfsantriebsvorrichtung gemäß Fig. 3A, wobei sich das Antriebsrad der Hilfsantriebsvorrichtung in einer Kurven-Vorwärtsfahrt-Stellung befindet,
Fig. 4 eine Rückansicht der Hilfsantriebsvorrichtung gemäß Fig. 3A, 3B,
Fig. 5 eine teilweise geschnittene Seitenansicht der Hilfsantriebsvorrichtung gemäß Fig. 3, wobei sich das Antriebsrad der Hilfsantriebsvorrichtung in einer Geradeaus-Vorwärtsfahrt-Stellung befindet,
Fig. 6 eine Darstellung gemäß Fig. 5 mit schematisch dargestelltem angekoppeltem Rollstuhl, wobei sich das Antriebsrad der Hilfsantriebsvorrichtung in einer Geradeaus-Vorwärtsfahrt-Stellung befindet,
Fig. 7 eine schematische Darstellung gemäß Fig. 6, wobei sich das Antriebsrad der Hilfsantriebsvorrichtung in einer Geradeaus-Rückwärtsfahrt-Stellung befindet,

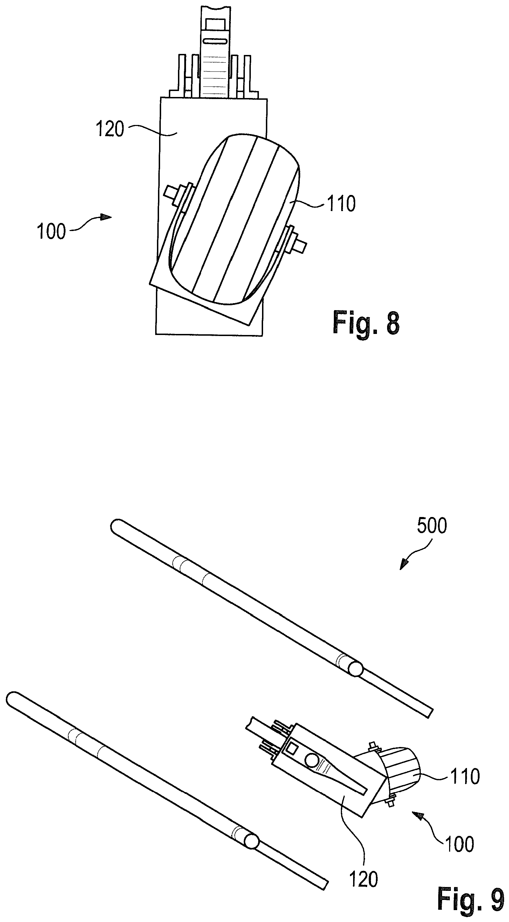

Fig. 8 eine Ansicht der Hilfsantriebsvorrichtung gemäß Fig. 3 von unten, wobei sich das Antriebsrad der Hilfsantriebsvorrichtung in einer Kurven-Rückwärtsfahrt-Stellung befindet,
Fig. 9 eine Ansicht der Hilfsantriebsvorrichtung gemäß Fig. 3 von oben, wobei seitliche Rahmenelemente eines angekoppelten Rollstuhls schematisch gezeigt sind und sich das Antriebsrad der Hilfsantriebsvorrichtung in einer Kurven-Vorwärtsfahrt-Stellung befindet,
Fig. 10 eine teilweise geschnittene perspektivische Detaildarstellung einer weiteren Ausführungsform einer erfindungsgemäßen Hilfsantriebsvorrichtung für einen Rollstuhl,
Fig. 11 eine Detaildarstellung einer weiteren Ausführungsform einer erfindungsgemäßen Hilfsantriebsvorrichtung für einen Rollstuhl in einer ersten Anschlagstellung des Antriebsrades,
Fig. 12 eine Detaildarstellung der Ausführungsform der Hilfsantriebsvorrichtung gemäß Fig. 11 in einer zweiten Anschlagstellung des Antriebsrades,
Fig. 13 eine perspektivische Frontansicht einer Ausführungsform eines Bediensatelliten,
Fig. 14 eine perspektivische Rückansicht des Bediensatelliten gemäß Fig. 13,
Fig. 15 eine Teilansicht des Bediensatelliten gemäß Fig. 13 in einer ersten Verdrehstellung,
Fig. 16 eine Teilansicht des Bediensatelliten gemäß Fig. 13 in einer zweiten Verdrehstellung,
Fig. 17 eine Teilansicht des Bediensatelliten gemäß Fig. 13 von hinten mit abgenommenem Abdeckungselement,
Fig. 18 eine auseinandergezogene Darstellung des Bediensatelliten gemäß Fig. 13 mit einem Rollstuhlmontageelement und einem Verriegelungselement,
Fig. 19 eine Ansicht der Bediensatellit-Montagefläche des Verriegelungselements gemäß Fig. 18,
Fig. 20 eine zusammengefügte Darstellung des Bediensatelliten gemäß Fig. 13 mit dem Rollstuhlmontageelement und dem Verriegelungselement,
Fig. 21 eine auseinandergezogene Darstellung eines Umlenkmechanismus eines Bediensatellit-Montageschwenkteils,
Fig. 22 eine schematische Darstellung einer Freigabestellung von Rastnasen eines Bediensatellit-Montageschwenkteils,
Fig. 23 eine schematische Darstellung einer Raststellung von Rastnasen eines Bediensatellit-Montageschwenkteils,
Fig. 24 eine Seitenansicht eines Ankoppelungsmechanismus einer Ausführungsform einer erfindungsgemäßen Hilfsantriebsvorrichtung für einen Rollstuhl zusammen mit einem Rollstuhl-Verbindungselement in einer Ankoppel-Bereitschaftsstellung,
Fig. 25 eine Seitenansicht des Ankoppelungsmechanismus gemäß Fig. 24 in einer Verriegelungs-Betriebsstellung,
Fig. 26 eine Seitenansicht des Ankoppelungsmechanismus gemäß Fig. 24 und 25 in einer Entriegelungsstellung,
Fig. 27 eine auseinandergezogene perspektivische Darstellung des Ankoppelungsmechanismus gemäß Fig. 24 bis 26,
Fig. 28 eine rückwärtige Ansicht des Ankoppelungsmechanismus gemäß Fig. 24 bis 27,
Fig. 29 eine Darstellung einer Bedienoberfläche eines Smartphones zur Einstellung einer Empfindlichkeit eines Dreh-Schaltrings eines Bediensatelliten und
Fig. 30 eine Darstellung einer Bedienoberfläche eines Smartphones zur Einstellung einer automatischen Anpassung der Kurvengeschwindigkeit in Abhängigkeit von einem Lenkwinkel eines Antriebsrades.

Nachfolgend werden Ausführungsbeispiele der vorliegenden Erfindung und des diesbezüglichen technischen Umfelds unter Bezug auf die beigefügten Zeichnungen beschrieben. Die nachfolgende Beschreibung beschreibt Ausführungsbeispiele der Erfindung und sollte nicht so verstanden werden, dass sie die vorliegende Erfindung einschränkt. Faktoren wie beispielsweise numerische Werte, Formen, Materialien, Komponenten, Positionen von Komponenten und die Weise, wie die Komponenten miteinander verbunden sind, sind lediglich illustrativ und nicht einschränkend. In den Zeichnungen sind aus Gründen der Übersicht und zur Verbesserung der Erkennbarkeit teilweise unterschiedliche Maßstäbe verwendet.

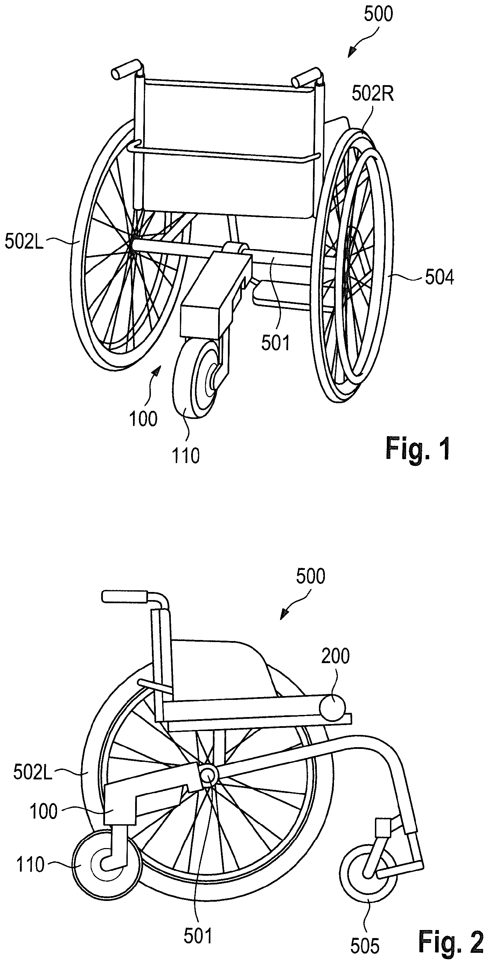

Fig. 1 zeigt in einer perspektivischen Darstellung eine Ausführungsform einer Hilfsantriebsvorrichtung 100 für einen Rollstuhl, die an eine Achse 501 eines Rollstuhls 500 angekoppelt ist. Die Achse 501 ist in dem gezeigten Anwendungsfall die Verbindungsachse zwischen den beiden großen Hinterrädern 502L, dem in Vorwärtsfahrtrichtung linken Hinterrad, und dem in Vorwärtsfahrtrichtung rechten Hinterrad 502R. Wie bei manuell antreibbaren Rollstühlen üblich, sind an den beiden großen Hinterrädern 502L, 502R Greifringe 504 angebracht, über die der Rollstuhl manuell angetrieben und gelenkt werden kann. In ebenfalls üblicher Weise verfügt der Rollstuhl 500 über zwei kleine, frei schwenkbare Vorderräder 505, die auch Castoren genannt werden. Fig. 2 zeigt die Ausführungsform der Hilfsantriebsvorrichtung 100 gemäß Fig. 1 in einer seitlichen Darstellung, wobei Teile des Rollstuhls 500, insbesondere das in Vorwärtsfahrtrichtung rechte Hinterrad 502R in dieser Darstellung weggelassen sind.

Die Hilfsantriebsvorrichtung 100 dient dazu, als unterstützender Hilfsantrieb für den grundsätzlich manuell antreibbaren Rollstuhl 500 verwendet zu werden. Einzelheiten zur Funktion der Hilfsantriebsvorrichtung 100 sowie zur Ankoppelung an den Rollstuhl 500 und zum Aufbau eines diesbezüglichen Ankoppelungsmechanismus 300 werden später detaillierter erläutert.

### Grundaufbau der Hilfsantriebsvorrichtung 100

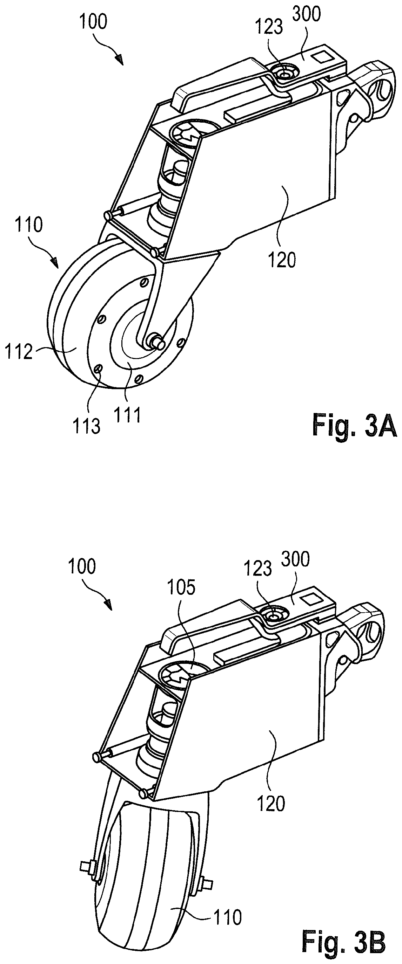

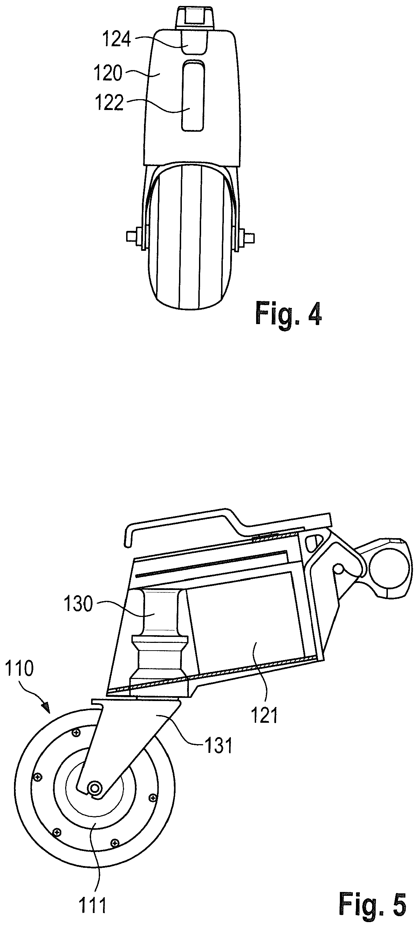

Fig. 3A zeigt eine perspektivische Darstellung der Hilfsantriebsvorrichtung 100, wobei sich ein Antriebsrad 110 der Hilfsantriebsvorrichtung 100 in einer Geradeaus-Vorwärtsfahrt-Stellung befindet. Fig. 3B zeigt die Hilfsantriebsvorrichtung 100 gemäß Fig. 3 in einem Betriebszustand, in dem sich das Antriebsrad 110 in einer Kurven-Vorwärtsfahrt-Stellung befindet. Fig. 4 zeigt die Hilfsantriebsvorrichtung 100 in einer Rückansicht und Fig. 5 zeigt sie in einer teilweise geschnittenen Seitenansicht.

Die Hilfsantriebsvorrichtung 100 weist als Hauptkomponenten insbesondere ein Antriebsrad 110, einen Hilfsantriebsvorrichtung-Grundkörper 120 und den bereits erwähnten Ankoppelungsmechanismus 300 auf. Zur Ansteuerung der Hilfsantriebsvorrichtung 100 und zur Steuerung ihrer Funktionen durch einen Benutzer ist ein Bediensatellit 200 vorgesehen.

Das Antriebsrad 110 weist als Antriebsmotor einen elektrischen Nabenmotor 111 auf, beispielsweise einen bürstenlosen Gleichstrommotor mit oder ohne Getriebe, der in das Antriebsrad 110 integriert ist. Die Reifendecke 112 des Antriebsrades 110 unterliegt naturgemäß Verschleiß. Eine leichte Auswechselbarkeit ist daher vorteilhaft. In der in den Figuren dargestellten Ausführungsform ist die Reifendecke mittig geteilt, formschlüssig mit dem rotierenden Teil des Antriebsmotors verbunden und mittels seitlicher Schrauben 113 befestigt. Es versteht sich, dass dem Fachmann auch andere technische Möglichkeiten zur Verfügung stehen einschließlich kraftschlüssiger Verbindungen wie beispielsweise Kleben.

Der elektrische Nabenmotor 111 ist über einen Stromleiter elektrisch verbunden mit einem Haupt-Energiespeicher in Form einer wiederaufladbaren Haupt-Batterie 121, die in dem Hilfsantriebsvorrichtung-Grundkörper 120 untergebracht ist. Ebenfalls in dem Hilfsantriebsvorrichtung-Grundkörper 120 untergebracht sind Bauelemente eines Batteriemanagementsystems zum Management des Ladungszustands, insbesondere der Ladung- und Entladung der Haupt-Batterie 121, Bauteile einer Leistungs- und Steuerungselektronik, das heißt einer elektronischen Steuereinrichtung, zur Steuerung der Funktionen der Hilfsantriebsvorrichtung 100, insbesondere des elektrischen Nabenmotors 111, sowie weiterer elektrischer Komponenten der Hilfsantriebsvorrichtung 100, beispielsweise einer Rückleuchte 124, die durch LED-Elemente dargestellt werden kann und vorzugsweise an einer in Betriebsstellung rückwärtigen Fläche des Hilfsantriebsvorrichtung-Grundkörpers 120 angebracht ist.

Auf der Rückseite des Hilfsantriebsvorrichtung-Grundkörpers 120 kann eine Rückleuchte 122 angeordnet sein, beispielsweise in Form eines aufgeklebten Bandes mit LED Leuchtelementen, die von der wiederaufladbaren Haupt-Batterie 121 mit Strom versorgt werden. An einer geeigneten Stelle des Hilfsantriebsvorrichtung-Grundkörpers 120 können zudem ein Hauptschalter 123 zum Umschalten der Hilfsantriebsvorrichtung 100 zwischen einem ausgeschalteten Zustand und einem Bereitschaftszustand sowie eine am Hilfsantriebsvorrichtung-Grundkörpers 120 angeordnete Grundkörper-Ladebuchse 124, beispielsweise in Form einer USB Steckbuchse, mit Verbindung insbesondere zu der wiederaufladbaren Haupt-Batterie 121 vorgesehen sein.

Die Leistungs- und Steuerungselektronik ist zudem verbunden mit dem Bediensatellit 200, der und dessen Funktionen sowie hierfür genutzte Sensoren später noch detaillierter beschrieben werden.

Die aus den Fig. 1 und 2 ersichtliche Anbindung der Hilfsantriebsvorrichtung 100 an die Achse 501 des Rollstuhls 500, die ein Verschwenken der Hilfsantriebsvorrichtung 100 in einer Ebene, die vertikal zur Achse 501 liegt, ermöglicht, nicht jedoch ein Verschwenken in einer Ebene, in welcher die Achse 501 liegt, bedingt, dass das Antriebsrad 110 einen Lenkvorgang ermöglichen muss, wenn diesbezüglicher Seitenschlupf des Antriebsrades 110 bei einer Kurvenfahrt des Rollstuhls vermieden werden soll. Bei einer Hilfsantriebsvorrichtung, wie sie in der US 2014/0262575 A1 offenbart ist, wird diese Lenkbarkeit eines bezüglich seiner Laufrichtung starr zum Rollstuhl angeordneten Antriebsrades durch längs des Radumfangs des Antriebsrades angeordnete Seitenrollen bewirkt.

Bei der Ausführungsform einer Hilfsantriebsvorrichtung 100, wie sie in den beigefügten Figuren dargestellt und nachfolgend beschrieben wird, wird ein grundsätzlich anderer technischer Weg beschritten. Das Antriebsrad 110 dieser Hilfsantriebsvorrichtung 100 ist als solches lenkbar, das heißt, seine Laufrichtung kann im betriebsbereiten Zustand, das heißt, wenn die Hilfsantriebsvorrichtung 100 an den Rollstuhl 500 angekoppelt ist, in Bezug auf den Rollstuhl 500 verschwenkt werden. Zur Bereitstellung dieser Lenkfunktion ist eine Lenkwelle 130 vorgesehen, mit der das Antriebsrad 110 verbunden ist. In der dargestellten Ausführungsform ist das Antriebsrad 110 in einer Lenkgabel 131 geführt, die drehfest mit der Lenkwelle 130 verbunden ist. Es versteht sich für den Fachmann, dass diesem zur Anbindung des Antriebsrades 110 an die Lenkwelle 130 auch andere Mittel zur Verfügung stehen.

Die Lenkwelle 130 ist in dem Hilfsantriebsvorrichtung-Grundkörper 120 drehbar gelagert, und zwar so, dass sie über einen weiten Drehbereich ungehindert drehen kann. Vorzugsweise kann die Lenkwelle 130 eine ungehinderte Drehung ausführen über einen Drehbereich von mindestens 360°, in einer speziellen Ausführungsform über einen Drehwinkel von beispielsweise 380°. Mit anderen Worten, die Lenkgabel 131 und damit auch das in dieser gelagerte Antriebsrad 110 sind frei verschwenkbar gegenüber dem Hilfsantriebsvorrichtung-Grundkörper 120 und damit auch, wenn dieser an den Rollstuhl 500 angekoppelt ist, gegenüber dem Rollstuhl 500.

In einer bevorzugten Ausführungsform ist zum Betrieb der Hilfsantriebsvorrichtung 100 der Hilfsantriebsvorrichtung-Grundkörper 120 so an dem Rollstuhl 500 angekoppelt, dass die Lenkwelle 130 und das Antriebsrad 110, wenn es sich in Geradeausfahrtstellung befindet, in einer Ebene liegen, die mittig zwischen den Hinterrädern 502R, 502L liegt.

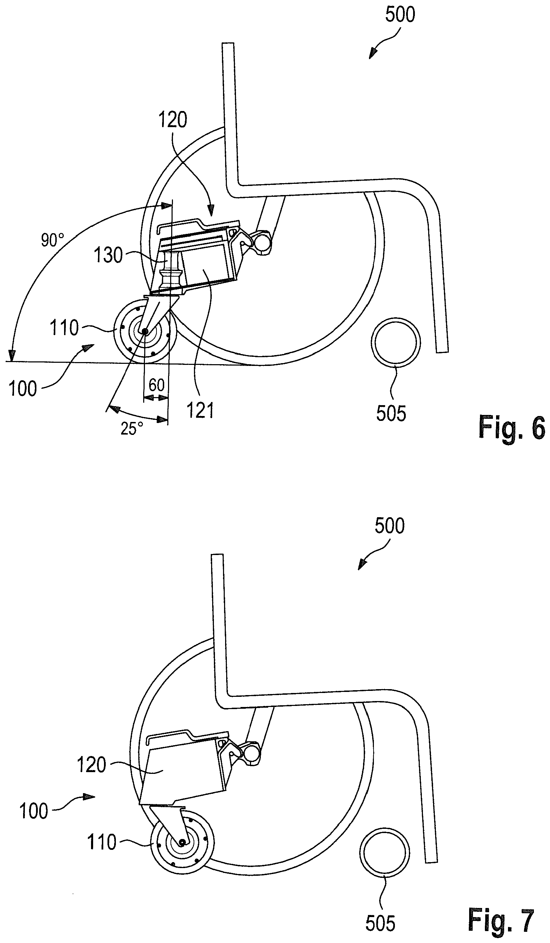

In dieser bevorzugten Ausführungsform nimmt die Lenkwelle 130 dann, wenn die Hilfsantriebsvorrichtung 100 an dem Rollstuhl 500 betriebsbereit angekoppelt ist, eine Stellung ein, die idealerweise senkrecht zu einer Aufstandsfläche des Rollstuhls 500 ist. Mit anderen Worten, wenn der Rollstuhl 500 auf einer ebenen und horizontalen Fläche steht, so steht die Lenkwelle 130 bei betriebsbereit an dem Rollstuhl angekoppelter Hilfsantriebsvorrichtung 100 senkrecht zu dieser ebenen und horizontalen Fläche, das heißt vertikal (siehe Fig. 6). Die Abweichung von dem idealen Fall der Vertikalen sollte vorzugsweise nicht größer sein als 5°, höchst vorzugsweise nicht größer als 3°.

Ein weiteres geometrisches Merkmal der vorteilhaften Ausführungsform gemäß Fig. 6 besteht darin, dass eine gedachte Linie durch die Drehachse des Antriebsrades 110 und die axiale Mitte der Lenkwelle 130 eine Neigung zur Lenkwelle, das heißt zur Mittelachse der Lenkwelle 130, von etwa 25° aufweist und vorzugsweise nicht mehr als 5°, höchst vorzugsweise nicht mehr als 3° von diesem Wert abweicht, und ein Nachlauf bereitgestellt wird, das heißt ein Abstand einer Senkrechten durch die Drehachse des Antriebsrades 110 auf die horizontale Aufstandsfläche des Rollstuhls 500 zu der Lenkwelle, der beispielsweise 60 mm beträgt und vorzugsweise nicht mehr als 20 mm, höchst vorzugsweise nicht mehr als 10 mm_von diesem Wert abweicht. Zudem liegt in der beschriebenen Ausführungsform die Aufstandsfläche des Antriebsrades 110 in jeder Winkelstellung der Lenkwelle 130, in Vorwärtsfahrt-Richtung des Rollstuhls 500 gesehen, hinter der Aufstandsfläche der Hinterräder 502R, 502L.

Obwohl das Antriebsrad 110 durch die Lenkwelle 130 frei schwenkbar ist, nimmt es im Betrieb, das heißt dann, wenn es durch den elektrischen Nabenmotor 111 angetrieben den angekoppelten Rollstuhl 500 antreibt, selbsttätig eine Stellung ein, die ein problemloses Lenken des Rollstuhls durch den Benutzer über die Greifringe 504 ermöglicht. Das Antriebsrad richtet sich immer in die Richtung aus, die beispielsweise durch den diesbezüglichen manuellen Eingriff über die Greifringe 504 auf die beiden Hinterrädern 502R, 502L eingeleitet und damit vorgegeben wird. Dies schließt Geradeausfahrt vorwärts und rückwärts, Kurvenfahrt mit Kurven von beliebigen Kurvenradien und sogar ein Drehen des Rollstuhls auf der Stelle ein.

In Betracht zu ziehen ist, dass Hilfsantriebsvorrichtungen der hier in Rede stehenden Art an eine Vielzahl von Rollstühlen anbringbar sein müssen. Rollstühle ihrerseits werden den Körpermaßen des Benutzers angepasst. Dies hat unter anderem zur Folge, dass die Sitzhöhen der Rollstühle und insbesondere auch die Durchmesser der Hinterräder 502R, 502L variieren. Letzteres hat zur Folge, dass auch die Höhe einer die Hinterräder 502R, 502L verbindenden Achsstange variiert. Marktübliche Rollstühle verwenden üblicherweise Hinterräder, deren Durchmesser beispielsweise 22", 24", 25" und 26" (558,8mm; 609,6mm; 635mm und 660,4mm) betragen. Entsprechend dieser handelsüblichen Abstufungen können daher zu Anpassung der Hilfsantriebsvorrichtung 100 an eine gegebene Rollstuhlgeometrie, insbesondere im Hinblick auf die vorstehend erläuterten geometrischen Aspekte, unterschiedliche Längenvarianten der Lenkgabel 131 bereitgehalten werden. Da medizinische Hilfsmittel in vielen Fällen mehrmals verwendet werden und im Laufe des Lebenszyklus an mehrere Rollstühle angebaut werden können, ist die hierdurch gegebene leichte Austauschbarkeit der anzupassenden Komponenten ein bedeutender wirtschaftlicher Faktor.

### Lenkbewegung und Stromversorgung

Wie vorstehend ausgeführt ist es vorteilhaft, wenn das Antriebsrad 110 jeden beliebige Schwenkstellung einnehmen kann, das heißt die Lenkwelle 130 sich frei um 360°drehen kann. Dies schließt dann grundsätzlich die Möglichkeit ein, dass sich die Lenkwelle 130 mehrfach hintereinander in gleicher Drehrichtung dreht.

Wie ebenfalls vorstehend ausgeführt, ist der elektrische Nabenmotor 110 über einen Stromleiter mit der wiederaufladbaren Haupt-Batterie 121 verbunden, die in dem Hilfsantriebsvorrichtung-Grundkörper 120 angeordnet ist. Wenn dieser Stromleiter durch ein Kabel dargestellt wird, ist Sorge dafür zu tragen, dass nicht eine mehrfache Drehung der Lenkwelle 130 in gleicher Richtung zu einem Aufwickeln des Kabels führt, das schließlich die Drehbarkeit der Lenkwelle 130 hemmt und damit die Funktionsfähigkeit der Hilfsantriebsvorrichtung 100 beeinträchtigt.

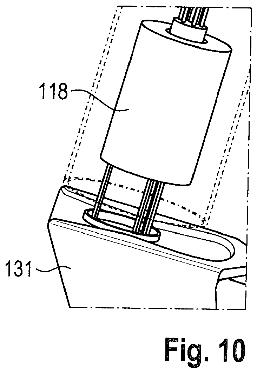

Eine Möglichkeit, dies zu erreichen, besteht darin, eine Stromübertragung in dem Bereich, wo ein drehendes und ein feststehendes Bauteil überbrückt werden müssen, über einen Schleifring 118 vorzusehen. Eine derartige Möglichkeit ist in Fig. 10 dargestellt.

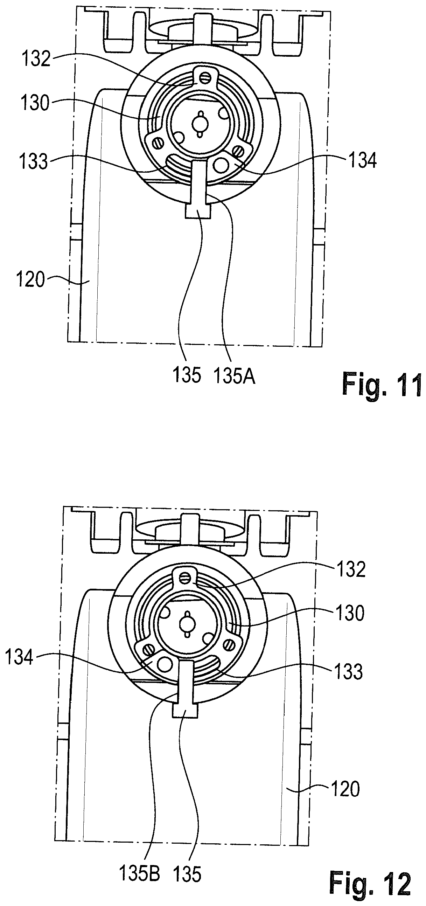

Eine weitere Möglichkeit besteht darin, einen Anschlag für die Drehung der Lenkwelle 130 vorzusehen, der zwar eine Drehung von vorzugsweise mehr als 360° erlaubt, jedoch ein mehrfaches vollständiges Verdrehen verhindert. Eine solche Lösung ist in den Figuren 11 und 12 dargestellt. Ein mit der Lenkwelle 130 drehfest verbundenes Anschlaggleitelement-Führungselement 132 ist mit einem bogenförmigen Langloch 133 versehen, in dem ein Anschlaggleitelement 134 verschiebbar geführt ist. Bei einer Drehung der Lenkwelle 130 in einer ersten Drehrichtung (siehe Fig. 11) gelangt das Anschlaggleitelement 134 in Anschlag mit einer ersten Seite 135A eines, in Bezug auf den Hilfsantriebsvorrichtung-Grundkörper 120, ortsfesten Anschlagelements 135, wobei es an einem ersten Ende des Langlochs 133 anliegt. Bei einer Drehung der Lenkwelle 130 in einer zur ersten Drehrichtung entgegengesetzten Richtung (siehe Fig. 12) gelangt das Anschlaggleitelement 134 ebenfalls in Anschlag mit einer zweiten Seite 135B des Anschlagelements 135; wobei es an einem zweiten Ende des Langlochs 133 anliegt.

Durch die Verschiebbarkeit des Anschlaggleitelements 134 in dem Langloch 133 kann bei geeigneter Wahl der Abmessungen der genannten Bauteile erreicht werden, dass die Lenkwelle 130 über einen Drehbereich von beispielsweise 380° verdreht werden kann, bevor sie jeweils in Anschlag gelangt. Dies ermöglicht es, dass das Antriebsrad 110 um mehr als 360° verschwenken kann, mithin alle für den Fahrbetrieb vorzugsweise bereitzustellenden Richtungen einnehmen kann, und dennoch eine mehrfache vollständige Umdrehung der Lenkwelle 130 hintereinander in gleicher Richtung und damit ein Aufwickeln eines Stromkabels, das den Antriebsmotor 111 mit der wiederaufladbaren Haupt-Batterie 121 in dem Hilfsantriebsvorrichtung-Grundkörper 120 verbindet, verhindert wird.

### Bewegungsbasiertes System und Bediensatellit

In einer Ausführungsform kann die Hilfsantriebsvorrichtung 100 als rein bewegungsbasiertes System betrieben werden, das heißt als ein System, bei dem eine Bewegung, insbesondere des Antriebsrades 110, detektiert wird und diese Bewegung dann elektromotorisch unterstützt beziehungsweise verstärkt wird. Wird beispielsweise der Rollstuhl 500, an den die Hilfsantriebsvorrichtung 100 angekoppelt ist, von dem Benutzter über die Greifringe 504 an den Hinterrädern 502R, 502L manuell in Richtung einer Vorwärtsfahrt angetrieben, erkennt die Leistungs- und Steuerungselektronik zur Steuerung der Funktionen der Hilfsantriebsvorrichtung 100 diese Bewegung mittels entsprechender Sensoren, zu denen, ohne hierauf beschränkt zu sein, ein oder mehrere der nachfolgend genannten Sensoren, nämlich beispielsweise ein Drehratensensor, der die Drehgeschwindigkeit und Drehrichtung des Antriebsrades 110 detektiert, und/oder ein oder mehrere Beschleunigungssensoren, die Beschleunigungen in unterschiedlichen räumlichen Richtungen detektieren, einen Gyrosensor sowie weitere optische, kapazitive, induktive Sensoren, gehören können, gegebenenfalls auch ein Lenkwelle-Drehwinkelsensor 105 (siehe Fig. 3B), der die Stellung der Lenkwelle 130 detektiert, und steuert den Nabenmotor 111 zur elektromotorischen Drehung in Vorwärtsrichtung an.

In einer anderen Ausführungsform erfolgt die Bedienung, obwohl diese Ausführungsform ebenfalls die vorstehend aufgelisteten Sensoren aufweisen kann, diese jedoch gegebenenfalls zusätzlich oder alternativ auch für andere Funktionen nutzt, über einen vom Benutzer zu betätigenden Bediensatellit 200. Dessen Aufbau wird nachfolgend beschrieben. Eine Beschreibung Bedienfunktionen und Fahrt erfolgt anschließend.

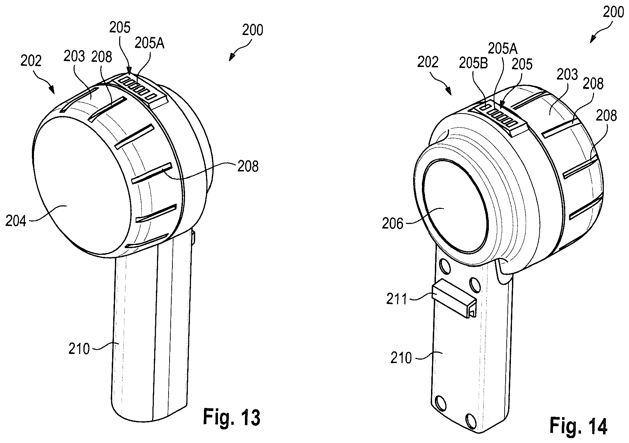

Eine Ausführungsform des Bediensatelliten 200 ist in den Figuren 13 bis 20 dargestellt. Ein möglicher Anbringungsort an einem Rollstuhl 500 ist aus Fig. 2 ersichtlich.

Die Figuren 13 und 14 zeigen in jeweils perspektivischer Darstellung eine Vorderansicht und eine Rückansicht einer Ausführungsform eines Bediensatelliten 200. Der Bediensatellit 200 dient zur Steuerung der Hilfsantriebsvorrichtung 100 und weist, insbesondere in seinem Inneren, die hierzu erforderlichen elektrischen und elektronischen Bauteile (nicht in den Figuren gezeigt) auf, die für die weitere Beschreibung dieser Ausführungsform im Folgenden unter dem Begriff Bediensatellit-Steuerungseinheit zusammengefasst werden. Die bidirektionale Kommunikation zwischen der Bediensatellit-Steuerungseinheit des Bediensatelliten 200 und der Leistungs- und Steuerungselektronik zur Steuerung der Funktionen der Hilfsantriebsvorrichtung 100 kann mittels Kabel, in den Figuren nicht dargestellt, oder kabellos, beispielsweise durch eine Bluetooth Anbindung, erfolgen.

Der Bediensatellit verfügt über ein Bediensatellit-Schaltteil 202 und ein Bediensatellit-Montageteil 210.

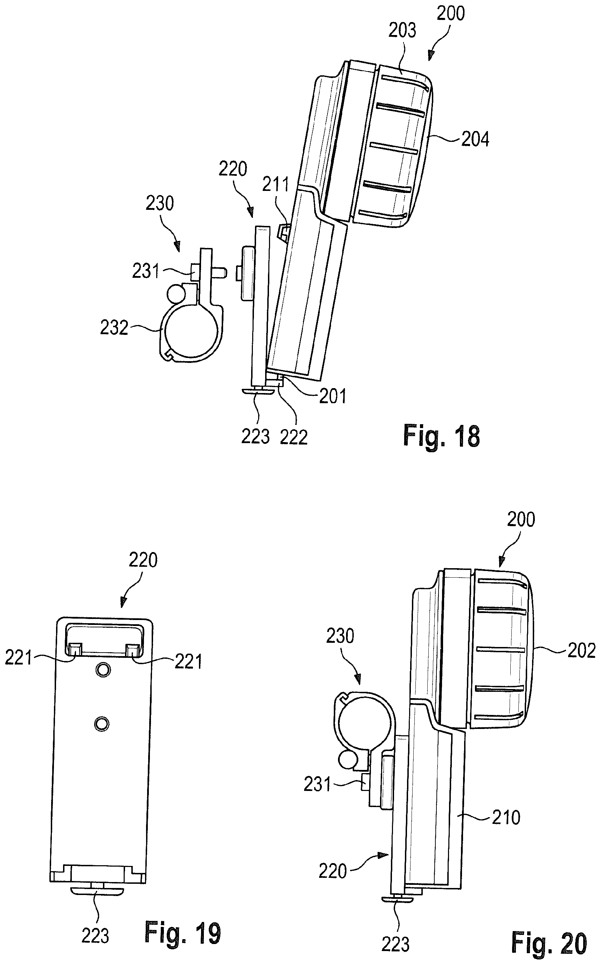

Das Bediensatellit-Montageteil 210 dient der Montage des Bediensatelliten 200 an einem Rollstuhl 500. Hierzu kann es über eine Schnellverschlusseinrichtung mit einem Bediensatellit-Montageschwenkteil 220 verrastet werden, indem ein Hinterschnitt 201 des Bediensatellit-Montageteils 210 in einen Fixierhaken 222 des Bediensatellit-Montageschwenkteils 220 eingehakt wird, das Bediensatellit-Montageteil 210 dann in Anlage an das Bediensatellit-Montageschwenkteil 220 gebracht wird, so dass ein an dem Bediensatellit-Montageteil 210 vorgesehener Rasthaken 211 mit federbelasteten Rastnasen 221 an dem Bediensatellit-Montageschwenkteil 220 verrasten (siehe, auch hinsichtlich der diesbezüglich vorgesehenen Anlaufschrägen, die Figuren 18 bis 20). Ein Lösen des Bediensatellit-Montageteils 210 von dem Bediensatellit-Montageschwenkteil 220 erfolgt in umgekehrter Reihenfolge, wobei die federbelasteten Rastnasen 221 des Bediensatellit-Montageschwenkteils 220 eingefahren, das heißt nach unten abgesenkt, werden können durch einen ebenfalls federbelasteten Ausklinkknopf 223, der über einen Umlenkmechanismus mit den federbelasteten Rastnasen 221 des Bediensatellit-Montageschwenkteils 220 verbunden ist.

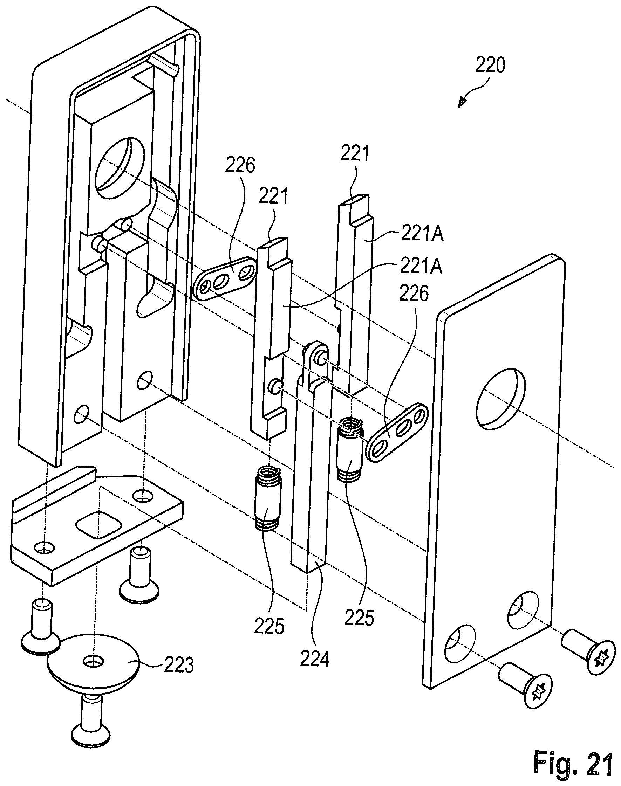

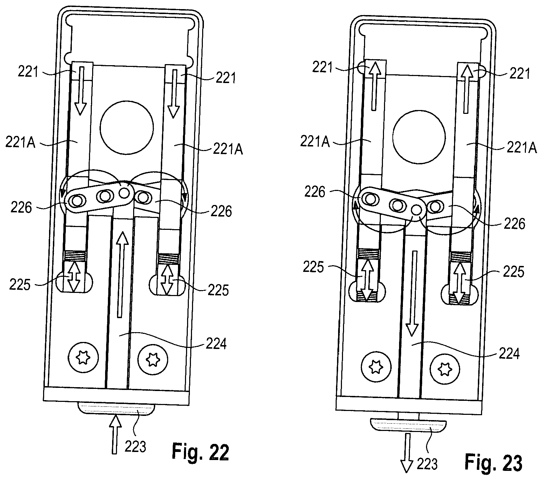

Wie in den Fig. 21 bis 23 gezeigt, sind die beiden Rastnasen 221 an oberen Enden von jeweiligen Rastnasenstangen 221A ausgebildet. Die Rastnasenstangen 221A werden mittels einer jeweiligen Druckfeder 225 in die in Fig. 23 dargestellte Raststellung gedrückt und sind über Umlenkhebel 226 mit einer Schubstange 224 verbunden, die ihrerseits mit dem Ausklinkknopf 223 verbunden ist. Wird nun, ausgehend von der Raststellung gemäß Fig. 23, der Ausklinkknopf gegen die Federwirkung der Druckfedern 225 in Richtung auf das Gehäuse des Bediensatellit-Montageschwenkteils 220 gedrückt, so bewegen sich die Rastnasenstangen 221A in Folge der Umlenkhebel 226 in Gegenrichtung der Schubstange 224 und bewirken ein Absenken der Rastnasen 221, so dass das Bediensatellit-Montageschwenkteil 220 freigegeben wird. Dieser Zustand einer Freigabestellung der Rastnasen 221 ist in Fig. 22 dargestellt. Lässt man den Ausklinkknopf 223 los, so kehren die Rastnasen 221 durch die Federkraft der Druckfedern 225 wieder in ihre Raststellung gemäß Fig. 23 zurück.

Das Bediensatellit-Montageschwenkteil 220 ist seinerseits mit einem Rollstuhl-Montageteil 230 über eine Montageschraube 231 verbindbar, wobei das Bediensatellit-Montageschwenkteil 220 zu dem Rollstuhl-Montageteil 230 eine frei bestimmbare Drehstellung einnehmen und in dieser über die Montageschraube 231 fixiert werden kann.

Das Rollstuhl-Montageteil 230 ist mit einem Schraub-Klemm-Element 232 versehen, das es ermöglicht, das Rollstuhl-Montageteil 230 an einer geeigneten Stelle eines Rollstuhls 500 an dessen Rahmenrohren zu befestigen.

Durch den beschriebenen Aufbau ergibt sich eine große Vielfalt möglicher Befestigungsstellen und Befestigungsstellungen für den Bediensatellit 200 an dem Rollstuhl 500, insbesondere auch an sowohl der rechten als auch der linken Seite des Rollstuhls, wodurch eine praxisgerechte Bedienung sowohl für Rechtshänder als auch für Linkshänder möglich ist.

Das Bediensatellit-Schaltteil 202 verfügt über Schaltelemente, mittels derer über entsprechende Betätigungsvorgänge die Ansteuerung der Hilfsantriebsvorrichtung 100 bewirkt wird, und zwar insbesondere über einen Dreh-Schaltring 203, der am Außenumfang des Bediensatellit-Schaltteils 202 angeordnet und mit Greifstegen 208 versehen ist, und einen Druck-Schaltknopf 204, der innerhalb des Außenumfangs des Bediensatellit-Schaltteils 202 und damit auch innerhalb des Außenumfangs des Druck-Schaltknopfs 204 angeordnet, in Richtung der Drehachse des Dreh-Schaltrings 203 betätigbar, großflächig ausgeführt und an der bei Montage am Rollstuhl 500 nach außen gewandten Stirnseite des Bediensatellit-Schaltteils 202 und damit auch des Druck-Schaltknopfs 204 angeordnet ist.

Der Dreh-Schaltring 203 kann in beiden Umfangsrichtungen, im Uhrzeigersinn und im Gegenuhrzeigersinn, beliebig weit gedreht werden. Ein diesbezüglicher Anschlag ist nicht vorgesehen. Allerdings ist der Dreh-Schaltring 203 mit einer deutlich spürbaren Rastung versehen, die dem Benutzer beim Drehen ein taktiles und/oder auditives Betätigungsfeedback gibt. Mit anderen Worten, der Dreh-Schaltring 203 kann beliebig weit, über beliebig viele Umdrehungen, in jeder Richtung gedreht werden. Der Winkelbereich von 360° einer vollen Umdrehung ist jedoch in eine bestimmte Anzahl von Teilbereichen unterteilt, so dass jedes Mal, wenn ein solcher Teilbereich überschritten wird, eine entsprechende Rastung spürbar und/oder hörbar ist.

Das Überschreiten eines solchen Teilbereiches löst ein Signal der Bediensatellit-Steuerungseinheit aus, das in seinen Eigenschaften programmierbar ist und an die Leistungs- und Steuerungselektronik zur Steuerung der Funktionen der Hilfsantriebsvorrichtung 100 übertragen wird, wobei auch die Drehrichtung der Betätigung den Inhalt des Signals beeinflusst.

Einzelheiten zu den Steuerfunktionen, die durch Betätigung des Bediensatelliten 200 mittels der Bediensatellit-Steuerungseinheit an die Leistungs- und Steuerungselektronik zur Steuerung der Funktionen der Hilfsantriebsvorrichtung 100 übermittelt werden, werden weiter unten beschrieben.

Der Druck-Schaltknopf 204 kann federbelastet durch Druck betätigt werden. Seine Betätigung löst ebenfalls ein Signal der Bediensatellit-Steuerungseinheit aus, das an die Leistungs- und Steuerungselektronik zur Steuerung der Funktionen der Hilfsantriebsvorrichtung 100 übertragen wird, wobei auch die Dauer der Betätigung den Inhalt des Signals beeinflussen kann.

Auf einer Außenseite des Bediensatelliten 200, bei der gezeigten Ausführungsform auf dem Außenumfang des Bediensatellit-Schaltteils 202, ist eine Anzeigeeinrichtung 205, beispielsweise in Form einer LED-Anzeige, vorgesehen, die Informationen über Betriebszustände der Antriebsvorrichtung beziehungsweise Hilfsantriebsvorrichtung 100 anzeigt und bei der gezeigten Ausführungsform beispielsweise sowohl über den Ladezustand der Haupt-Batterie 121 in dem Hilfsantriebsvorrichtung-Grundkörper 120 informiert, beispielsweise durch einen Streifen von mehreren weißen LED Elementen 205A, wobei die Anzahl der leuchtenden Elemente mit dem Ladezustand korrespondiert, sowie auch über den Ladezustand einer in dem Bediensatellit integrierten wiederaufladbaren Bediensatellit-Batterie (nicht gezeigt), beispielsweise ein einzelnes RGB LED Element 205B, das über den Wechsel der Farbe den Ladezustand kommuniziert.

Die Anzeigeeinrichtung 205 ist so ausgeführt, dass ihre Anordnung auf dem Bediensatelliten 200 einstellbar ist, das heißt, dass sie verändert werden kann. Dies ermöglicht es, die Ausrichtung der Anzeigeeinrichtung 205 bezüglich ihrer Sichtbarkeit für eine im Rollstuhl 500 sitzende Person einem jeweiligen Anbringungsort des Bediensatelliten 200 an einem Rollstuhl 500 anzupassen. Bei der gezeigten Ausführungsform wird dies beispielsweise durch den nachfolgend beschriebenen Ausbau erreicht.

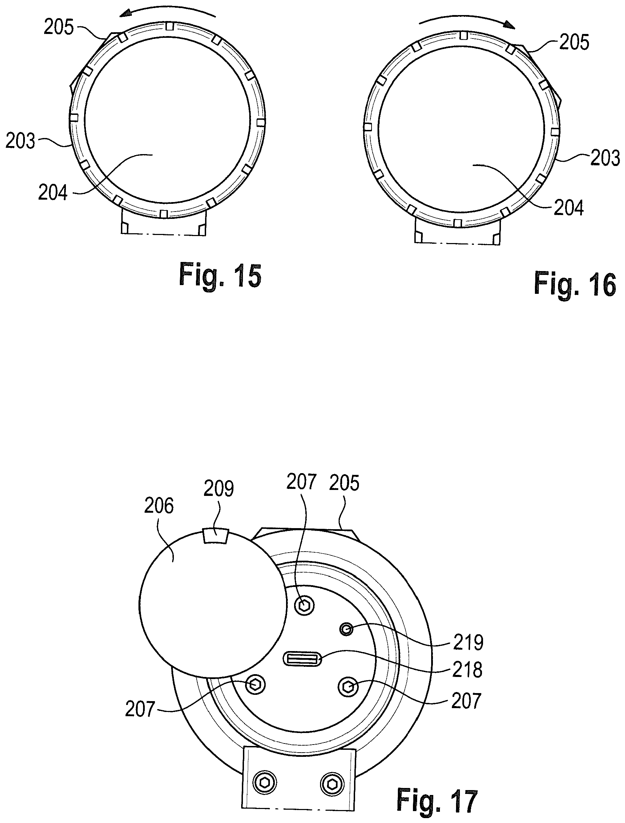

An der bei Montage am Rollstuhl 500 nach innen gewandten Stirnseite des Bediensatellit-Schaltteils 202 ist eine Abdeckung 206 angeordnet, die von Hand durch Betätigung eines federnden Entriegelungselements 209 entfernt und wieder angebracht werden kann (siehe Fig. 14 und 17). Das Abnehmen der Abdeckung 206 ermöglicht Zugang zu drei Fixierschrauben 207, zu einer am Bediensatelliten 200 angeordnete Adapter-Ladebuchse 218, beispielsweise in Form einer USB-Steckbuchse, und zu einem Koppelungs-Tastknopf (Pairing Button) 219.

Das Lösen der drei Fixierschrauben 207 ermöglicht ein Verdrehen des Außenumfangs des Bediensatellit-Schaltteils 202 in Umfangsrichtung (siehe Fig. 15 und 16). Das anschließende Anziehen der drei Fixierschrauben 207 fixiert den Außenumfang des Bediensatellit-Schaltteils 202 in der neuen Stellung in Bezug auf das Bediensatellit-Montageteil 210. Hierdurch kann sichergestellt werden, dass sich, unabhängig davon, an welcher Stelle des Rollstuhls 500 und in welcher Stellung zu diesem der Bediensatellit 200 angebracht ist, die Anzeigeeinrichtung 205 immer im Blickwinkel des Benutzers ist.

Über die Adapter-Ladebuchse 218 kann die Bediensatellit-Batterie des Bediensatelliten-200 geladen werden, auch während der Fahrt, wobei die Energie hierzu entweder durch eine separate Energiequelle oder durch Verbindung mit der an dem Hilfsantriebsvorrichtung-Grundkörper 120 vorgesehenen Grundkörper-Ladebuchse 124 bereitgestellt werden kann.

Der Koppelungs-Tastknopf (Pairing Button) 219 dient der Herstellung einer Bluetooth-Verbindung mit der Leistungs- und Steuerungselektronik zur Steuerung der Funktionen der Hilfsantriebsvorrichtung 100 in dem Hilfsantriebsvorrichtung-Grundkörper 120.

### Bedienfunktionen und Fahrt

Nachfolgend wird beispielhaft die Bedienung der Hilfsantriebsvorrichtung 100 und die Fahrt eines mit dieser verbundenen Rollstuhls 500 erläutert. Es versteht sich, dass vielerlei Abwandlungen hiervon dem Fachmann möglich sind.

Ausgehend von einem Ruhezustand, in dem die Hilfsantriebsvorrichtung 100 ausgeschaltet ist, wird durch Betätigung des Hauptschalters 123 am Hilfsantriebsvorrichtung-Grundkörper 120 die Hilfsantriebsvorrichtung 100 von dem ausgeschalteten Zustand in den Bereitschaftszustand versetzt. In diesem Bereitschaftszustand empfängt die Leistungs- und Steuerungselektronik zur Steuerung der Funktionen der Hilfsantriebsvorrichtung 100, die in dem Hilfsantriebsvorrichtung-Grundkörper 120 angeordnet ist, Signale von der Bediensatellit-Steuerungseinheit, die in dem Bediensatellit 200 angeordnet ist.

Wenn in diesem Bereitschaftszustand der Hilfsantriebsvorrichtung 100 der Druck-Schaltknopf 204 an dem Bediensatellit-Schaltteil 202 des Bediensatelliten 200 länger als ein diesbezüglicher Schwellenwert, der beispielsweise 3 Sekunden betragen kann, gedrückt wird, wird die Hilfsantriebsvorrichtung 100 in einen Fahrbereitschaftszustand versetzt. Wird in diesem Fahrbereitschaftszustand der Dreh-Schaltring 203 an dem Bediensatellit-Schaltteil 202 des Bediensatelliten 200 in einer ersten Richtung gedreht, beispielsweise in einer, von einem in dem Rollstuhl sitzenden Benutzer aus gesehen, Vorwärtsrichtung, empfängt die Leistungs- und Steuerungselektronik zur Steuerung der Funktionen der Hilfsantriebsvorrichtung 100 entsprechende Signale von der Bediensatellit-Steuerungseinheit und steuert den Motor 111 an, ein Drehmoment abzugeben, das ein Drehen des Antriebsrads 110 bewirkt.

Das Drehen dieses Schaltelements, das heißt des Dreh-Schaltrings 203, ist ein richtungsgebundener Betätigungsvorgang, der in Abhängigkeit von der Betätigungsrichtung eine dieser Betätigungsrichtung entsprechende Ansteuerung der Antriebsvorrichtung 100 bewirkt, wobei der Zusammenhang zwischen der Betätigungsrichtung des Dreh-Schaltrings 203 und der durch diese Drehung ausgelösten Ansteuerung der Antriebsvorrichtung beziehungsweise Hilfsantriebsvorrichtung 100 veränderbar ist.

Die Drehrichtung des Dreh-Schaltrings 203, die eine Vorwärtsfahrt einleitet, kann, beispielsweise durch eine entsprechende Programmierung, geändert werden. Dies bedeutet, dass unabhängig davon, ob der Bediensatellit an der linken oder rechten Seite eines Rollstuhls montiert ist, was beispielsweise in Abhängigkeit davon geschehen kann, ob der Nutzer Rechtshänder oder Linkshänder ist, eine Vorwärtsfahrt durch ein Vorwärtsdrehen eingeleitet wird, was eine intuitive Bedienung ermöglicht. Eine solche Programmierung, ebenso wie auch andere nutzerzugängliche Programmierungsmöglichkeiten, kann durch einen PC vorgenommen werden, jedoch auch über ein Smartphone mit Hilfe einer diesbezüglichen App, das heißt eines diesbezüglichen Anwenderprogramms, das dem Nutzer bereitgestellt wird.

Die Höhe des Drehmoments ist jeweils so bemessen, dass eine bestimmte Geschwindigkeit erreicht wird. Die Höhe der Geschwindigkeit bemisst sich danach, um wie viele Rastungen der Dreh-Schaltring bewegt wurde.

Mit anderen Worten, nach dem Einschalten in den Bereitschaftszustand durch Betätigung des Hauptschalters 123 und Einschalten des Fahrbereitschaftszustandes durch anhaltendes Drücken des Druck-Schaltknopfes 204 kann der Benutzer eine Fahrt mittels der elektromotorischen Kraft der Hilfsantriebsvorrichtung dadurch aufnehmen, dass er den Dreh-Schaltring 203 in Vorwärtsrichtung dreht. Die Fahrgeschwindigkeit stellt der Benutzer dadurch ein, wie weit er den Dreh-Schaltring 203, das heißt, wie viele Rastungen er hierbei überschreitet.

Das Verhältnis zwischen Rastung und Geschwindigkeit ist frei programmierbar, wobei lediglich eine Geschwindigkeitsobergrenze so vorgesehen sein kann, dass sie vom Benutzer nicht abänderbar ist. Das Verhältnis zwischen Rastung und Geschwindigkeit drückt sich darin aus, wie viele Rastungen überschritten werden müssen, um eine bestimmte Geschwindigkeitsänderung, das heißt eine Geschwindigkeitssteigerung oder Geschwindigkeitsreduzierung, zu bewirken. Diese Einstellbarkeit ermöglicht es, das Ansprechverhalten beziehungsweise die Empfindlichkeit des Dreh-Schaltrings 203 zu verändern und hierbei individuell an die Bedürfnisse unterschiedlicher Benutzergruppen und deren Behinderungsausprägung anzupassen. Dies ist insbesondere bei Benutzern mit eingeschränkt koordinativen Fähigkeiten der Arme und Hände von Vorteil, da die Einstellbewegungen dann gegebenenfalls grobmotorischer ausgeführt werden können.

Eine beispielhafte Einstellung kann so eingenommen sein, dass die Geschwindigkeitsobergrenze auf 12 km/h festgelegt und das Verhältnis zwischen Rastung und Geschwindigkeit so eingestellt sein, dass ein Überschreiten einer Rastung eine Geschwindigkeitssteigerung von 1 km/h bedeutet. Wenn unter diesen Bedingungen ein Benutzter aus dem Stand den Dreh-Schaltring 203 um eine Rastung nach vorne dreht, nimmt der Rollstuhl 500 durch die elektromotorische Antriebskraft der Hilfsantriebsvorrichtung 100 eine Fahrgeschwindigkeit von 1 km/h auf. Jede weitere Drehung des Dreh-Schaltrings 203 nach vorne erhöht die Fahrgeschwindigkeit um weitere 1 km/h. Eine andere Einstellung könnte beispielsweise bewirken, dass pro Rastung die Geschwindigkeitsänderung nur 0,5 km/h beträgt. Wird die festgesetzte Höchstgeschwindigkeit erreicht, das heißt bei dem hier beschriebenen ersten Beispiel nach Überschreiten von 12 Rastungen, bei dem zweiten Beispiel nach 24 Rastungen, ist ein Weiterdrehen des Dreh-Schaltrings 203 in Vorwärtsrichtung mechanisch zwar möglich, bleibt jedoch steuerungstechnisch ohne Auswirkungen.

Ein Rückdrehen des Dreh-Schaltrings 203 in Rückwärtsrichtung senkt in entsprechender Weise die Geschwindigkeit ab, das heißt pro Rastung um jeweils den eingestellten Geschwindigkeitswert. Ein Rückdrehen des Dreh-Schaltrings 203 in Rückwärtsrichtung kann somit eine Geschwindigkeitsreduzierung und, nach einer entsprechenden Zahl von Rastungen, auch völliges Abstoppen, das heißt ein Beenden der Erzeugung von Antriebsmoment, bedingen. Auch in diesem Fall ist dann ein weiteres Rückwärtsdrehen mechanisch möglich, steuerungstechnisch jedoch ohne Auswirkungen.

Ein völliges Abstoppen ist auch dadurch möglich, dass der Druck-Schaltknopf 204 während der Fahrt gedrückt wird. Hierbei ist ein kurzzeitiges Drücken ausreichend. Das, auch nur kurzzeitige, Drücken des Druck-Schaltknopfes 204 ermöglicht somit ein sofortiges Beenden der Erzeugung von Antriebsmoment.

Wenn in dem Fahrbereitschaftszustand der Hilfsantriebsvorrichtung 100 der Druck-Schaltknopf 204 an dem Bediensatellit-Schaltteil 202 des Bediensatelliten 200 länger als ein diesbezüglicher Schwellenwert, der beispielsweise ebenfalls 3 Sekunden betragen kann, gedrückt wird, wird die Hilfsantriebsvorrichtung 100 zurück in den Bereitschaftszustand versetzt.

Das Vorstehende beschreibt Grundzüge der Bedienung der Hilfsantriebsvorrichtung 100 mittels der diesbezüglichen elektrischen und elektronischen Komponenten wie Schaltern, Stellelementen und Programmierung. Nachfolgend wird die Bedienung und Fahrt mit einem Rollstuhl 500, an dem eine Ausführungsform der Hilfsantriebsvorrichtung 100 angekoppelt ist, beschrieben.

Wie vorstehend erläutert, ist das Antriebsrad 110 über die Lenkwelle 130 gelagert und frei schwenkbar. Kraft wird von der Hilfsantriebsvorrichtung 100 grundsätzlich nur in Bezug auf Vortrieb entwickelt. Ein Lenken findet über die Greifringe 504 an den Hinterrädern 502R, 502L statt, indem bei einer beabsichtigten Kurvenfahrt das kurveninnere Hinterrad verzögert wird. Das frei schwenkbare Antriebsrad 110 verhält sich dabei hinsichtlich seines Schwenkverhaltens, trotz der bereitgestellten Antriebskraft, wie ein freischwenkender Castor und richtet sich selbsttätig entsprechend aus.

Das frei schwenkbare Antriebsrad 110 führt, insbesondere im Gegensatz zu einem in Fahrtrichtung fest angeordneten Antriebsrad, zu einer überlegenen Wendigkeit und ermöglicht ein einfaches, mit wenig Kraftaufwand verbundenes Einleiten einer Kurvenfahrt. Da sich das Antriebrad 110 immer selbstständig in die Richtung des Vektors derjenigen Kurve stellt, die durch beispielsweise manuell über einen der Greifringe 504 eingeleitete einseitige Verzögerung durchfahren wird, wird eine motorische unterstützte Kurvenfahrt eingeleitet, die bei vollständiger Verzögerung eines Rollstuhlrades bis zum Drehen auf der Stelle führt und zudem eine Rückwärtsfahrt in einer Stellung des Antriebsrades ermöglicht die derjenigen bei Vorwärtsfahrt entgegen gerichtet ist. Die physikalischen Gegebenheiten, zu denen insbesondere das frei schwenkbare Antriebsrad, der Nachlauf und die mittigen Anbindung sowie Kraftwirkung des Antriebes hinter dem Aufstandspunkt der großen Rollstuhlräder zählen, ergeben ein äußerst wendiges und mit wenig Kraftaufwand beherrschbares Fahrverhalten.

Da das Lenken über die Greifringe 504 an den Hinterrädern 502R, 502L stattfindet, ist der Anbringungsort des Bediensatelliten vorzugsweise so zu wählen, dass er aus einer Stellung, in der die Hand eines Benutzers an dem Greifring 504 liegt, schnell und intuitiv erreichbar ist.

Bei allen Einstellungen, die benutzerseitig vorgenommen werden können, besteht, wie bereits weiter oben erwähnt, die Möglichkeit, dies durch ein Computerprogramm, beispielsweise eine Smartphone App oder eine PC Service-Applikation durchzuführen. Dies betrifft nicht nur die vorstehend beschriebenen Funktionsschritte, beispielsweise die Bedienungsempfindlichkeit des Dreh-Schaltrings 203. Auch Ein- und Ausschaltvorgänge können vom Benutzer mittels eines Smartphones und einer diesbezüglichen App ausgeführt werden. Sollte, beispielsweise während der Fahrt auf öffentlichen Verkehrswegen bei einbrechender Dunkelheit, das Einschalten der Rückleuchte 122 erforderlich werden und ein an dem Hilfsantriebsvorrichtung-Grundkörper 120 vorgesehener Schalter zum Einschalten der Rückleuchte 122 für den im Rollstuhl sitzenden Benutzer nicht oder nur schwer erreichbar sein, kann der Benutzer dieses Einschalten bequem vom Rollstuhl 500 aus mittels einer Smartphone App bewirken. Das Mitführen einer separaten Akkuleuchte für derartige Fälle ist somit nicht erforderlich.

### Kurvengeschwindigkeitsbegrenzung

Bei einer Hilfsantriebsvorrichtung der vorstehend beschriebenen Art, die einen Rollstuhl elektromotorisch antreibt, besteht die Möglichkeit, die Fahrtgeschwindigkeit dann zu reduzieren, wenn eine Kurve durchfahren wird.

Durch die Reduzierung der Antriebsleistung bei insbesondere engen Kurvenfahrten kann die Beherrschbarkeit des Rollstuhls verbessert werden, insbesondere für Rollstuhlfahrer mit höherer Querschnittslähmung und eingeschränkter Hand- und Fingerfunktion, denen die Kontrolle des Rollstuhls unter anspruchsvollen Fahrbedingungen erschwert ist. Insbesondere für solche Benutzergruppen kann eine Kurvengeschwindigkeitsbegrenzung beziehungsweise eine automatische Reduzierung der Kurvengeschwindigkeit ein Beitrag zu erhöhter Sicherheit sein.

Auch unter anderen Aspekten kann gegebenenfalls eine bedarfsgerechte Rücknahme der Antriebsleistung, das heißt des Antriebsdrehmoments des Motors 111 des Antriebsrades 110, angezeigt sein. Beispielsweise bei einer Fahrt in beengten Umgebungsverhältnissen wie in Innenräumen, zum Beispiel beim Ausweichen von Möbeln oder Gegenständen, oder in stark frequentierten Fußgängerzonen sowie generell bei engen Kurvenradien, kann eine bedarfsgerechte Kurvengeschwindigkeitsbegrenzung eine zusätzliche Sicherheitsfunktion darstellen.

Zur Realisierung einer derartigen Kurvengeschwindigkeitsbegrenzung ist mindestens ein Sensor vorgesehen, mittels dessen eine Kurvenfahrt erkannt und eine Kurvengeschwindigkeit erfasst werden kann. In der dargestellten Ausführungsform nutzt die Leistungs- und Steuerungselektronik zur Steuerung der Funktionen der Hilfsantriebsvorrichtung 100 mehrere entsprechende Sensoren, zu denen ebenfalls, wie bei der vorstehend beschriebenen Ausführungsform, ohne hierauf beschränkt zu sein, ein Lenkwelle-Drehwinkelsensor 105 (siehe Fig. 3B), der die Stellung der Lenkwelle 130 detektiert, ein Drehratensensor, der die Drehgeschwindigkeit und Drehrichtung des Antriebsrades 110 detektiert, mehrere Beschleunigungssensoren, die Beschleunigungen in unterschiedlichen räumlichen Richtungen detektieren, ein Gyrosensor sowie weitere optische, kapazitive und/oder induktive Sensoren gehören, und steuert den Nabenmotor 111 so an, dass ein elektromotorisches Antriebsmoment lediglich in der der aktuellen Fahrtsituation angemessenen Weise erzeugt wird.

Beispielsweise kann ein Antriebsdrehmoment, das eine konstante Geradeausfahrt ergibt, in Abhängigkeit von einem detektierten Kurvenradius reduziert werden, wobei die Reduktion zunimmt, wenn der Kurvenradius kleiner wird und/oder die Kurvengeschwindigkeit zunimmt.

Die diesbezüglichen Werte können beispielsweise in Kennfeldern abgelegt sein, deren Werte in praktischen Versuchen ermittelt werden. Ein Steuerungsprogramm der Leistungs- und Steuerungselektronik zur Steuerung der Funktionen der Hilfsantriebsvorrichtung 100 kann dann, basierend auf den aktuellen Sensorsignalen, bei der Berechnung auf ein derartiges Kennfeld zurückgreifen. Alternativ kann in dem Steuerungsprogramm eine Echtzeitberechnung auf der Basis dieser Sensorsignale erfolgen.

Wird beispielsweise der Lenkwelle-Drehwinkelsensor 105, der die Stellung der Lenkwelle 130 detektiert, als, neben einer Überwachung der Fahrgeschwindigkeit, eine der Haupteingangsgrößen für die Funktion der Kurvengeschwindigkeitsbegrenzung benutzt, so kann über diesen Sensor der Lenkwinkel des Antriebsrades 110 permanent überwacht werden.

Zudem kann, über ein Computerprogramm und eine (externe) Schnittstelle, eine Einstellung vorgenommen werden, um welchen Betrag die Antriebsleistung beziehungsweise das Antriebsdrehmoment in Abhängigkeit vom Kurvenradius beziehungsweise des Lenkwinkels reduziert werden soll. Des Weiteren kann dann, wenn der Kurvenradius wieder zunimmt und/oder in Geradeausfahrt übergegangen wird, die Antriebsleistung beziehungsweise das Antriebsdrehmoment automatisch wieder erhöht werden.

### Ankoppelungsmechanismus (Aufbau)

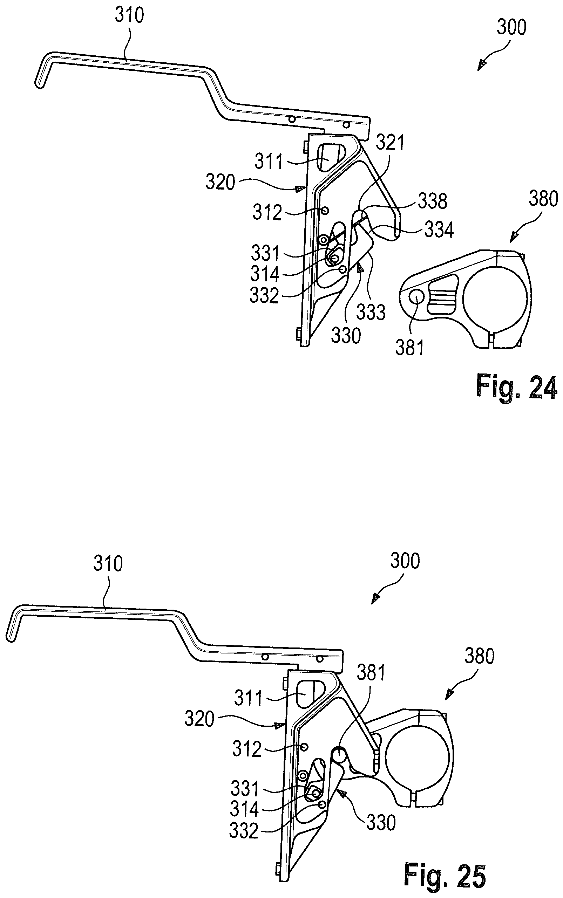

Die Ankoppelung der Hilfsantriebsvorrichtung 100 an den Rollstuhl 500 muss eine sichere Koppelung gewährleisten. Zudem sollte das Ankoppeln und Abkoppeln leicht durchführbar sein und die Koppelung sollte vorzugsweise zum Überwinden von Hindernissen wie einem Bordstein ein sogenanntes Ankippen des Rollstuhls 500 ermöglichen, das heißt ein Anheben der Vorderräder. Die nachfolgend unter Bezugnahme auf die Fig. 24 bis 28 beschriebene Ausführungsform eines Ankoppelungsmechanismus 300 erfüllt all diese Anforderungen.

In der in den Fig. 24 bis 28 gezeigten Ausführungsform ist der Ankoppelungsmechanismus 300 als Baueinheit dargestellt, die einen Ankoppelungsmechanismus-Grundkörper 320 aufweist, in dem Ankoppelnuten 321 ausgebildet sind, der zur Lagerung von Funktionselementen des Ankoppelmechanismus 300 dient, insbesondere eines Handgriffs 310 mit damit verbundenem Kipphebel 311, und der an einer Stirnseite des Hilfsantriebsvorrichtung-Grundkörpers 120 angebracht werden kann.

Es versteht sich jedoch für den Fachmann, dass die Funktionen des Ankoppelungsmechanismus-Grundkörpers 320 auch durch entsprechend ausgebildete Elemente des Hilfsantriebsmechanismus-Grundkörpers 120 übernommen werden können, das heißt, dass der Ankoppelungsmechanismus-Grundkörper 320 und der Hilfsantriebsmechanismus-Grundkörper 120 materialeinheitlich ausgebildet sein können.

Die Ankoppelnuten 321 sind im Wesentlichen V-förmig ausgeführt, um ein leichtes Einführen eines vorzugsweise zylinderförmig ausgeführten Ankoppelstifts 381 zu ermöglichen. Der Ankoppelstift 381 ist eine Ausführungsform eines zum Bewirken der Ankopplung formschlüssig zu haltendes Bauteils. Es versteht sich, dass ein derartiges zum Bewirken der Ankopplung formschlüssig zu haltendes Bauteil auch andere Formen aufweisen und anders ausgebildet sein kann. Der in der vorliegenden Ausführungsform beschriebene Ankoppelstift 381 kann zweigeteilt ausgeführt und zu beiden Seiten einer Ankoppelschelle 380 angebracht sein, die abnehmbar an einer Achse 501 eines Rollstuhls 500 (siehe Fig. 1 und 2) angebracht werden kann. Sofern ein Rollstuhl nicht über eine derartige Achse verfügt, kann ein diesbezügliches Bauteil (nicht gezeigt), das die Haltefunktion der Achse für die Ankoppelschelle 380 erfüllt, auch separat bereitgestellt und mit dem Rollstuhl verschraubt werden.

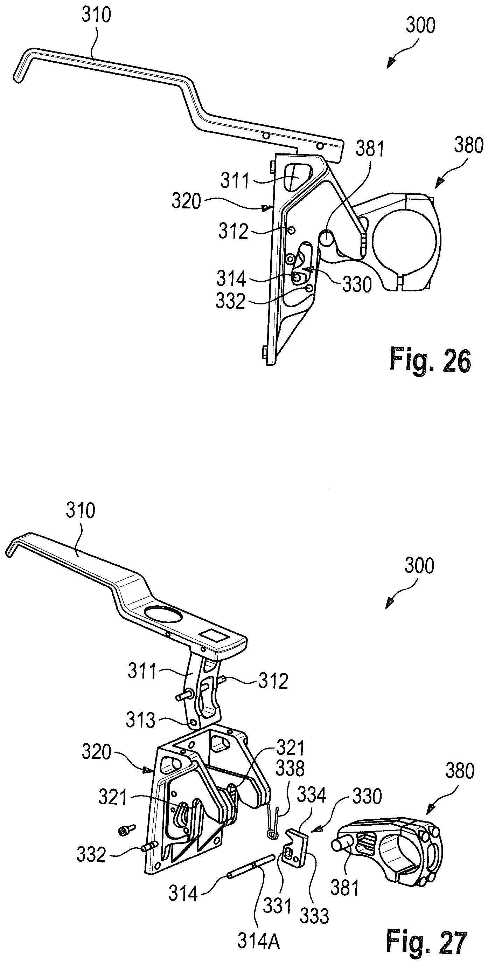

Der Kipphebel 311, der fest und starr mit dem Handhebel 310 verbunden ist, ist über einen Lagerstift 312 in dem Ankoppelungsmechanismus-Grundkörper 320 so gelagert, dass er über einen bestimmten Winkelbereich um die Mittelachse des Lagerstifts 312 drehbar ist, und zwar insbesondere Lagen einnehmen kann zwischen einer in Fig. 25 gezeigten Verriegelungs-Betriebsstellung und einer in Fig. 26 gezeigten Entriegelungsstellung mit einer dazwischenliegenden und in Fig. 24 gezeigten Ankoppel-Bereitschaftsstellung.

In dem Kipphebel 311 sind beidseitig Bohrung 313 ausgebildet, die jeweils einen Betätigungsstift 314 aufnehmen, der in betriebsbereit montiertem Zustand des Ankoppelmechanismus 300 durch ein Kulissenfenster 331 eines Verriegelungselements 330 verläuft, welches seinerseits über einen Verriegelungselement-Lagerstift 332 in dem Ankoppelungsmechanismus-Grundkörper 320 gelagert und über eine Schenkelfeder 338 im Uhrzeigersinn, bezogen auf die Darstellungsebene der Fig. 24 bis 26, federbelastet ist.

Das Verriegelungselement 330 ist in dem Ankoppelungsmechanismus-Grundkörper 320 bewegbar gelagert. Es ermöglicht in einer Verriegelungsstellung eine formschlüssige Verriegelung, in der die Hilfsantriebsvorrichtung 100 mit dem Rollstuhl 500 verkoppelt ist, und kann durch Betätigung des Handgriffs 310 in eine Entriegelungsstellung gebracht werden, in der ein Abkoppeln der Hilfsantriebsvorrichtung 100 von dem Rollstuhl 500 möglich ist. Das Verriegelungselement 330 ist so ausgebildet ist, das es federbelastet, in der dargestellten Ausführungsform über die Schenkelfeder 338, die Ankoppelnut 321 ganz oder zumindest teilweise verschließen kann. Mit anderen Worten, das Verriegelungselement verhindert in der Verriegelungsstellung, dass ein in die Ankoppelnut 321 eingeführter Ankoppelstift 381 aus der Ankoppelnut 321 austreten kann.

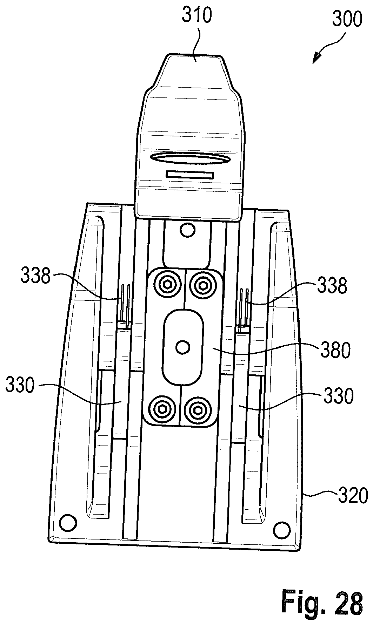

Fig. 28 zeigt in Verbindung mit Fig. 27 den symmetrischen Aufbau des Ankoppelungsmechanismus 300 mit zwei Verriegelungselementen 330 und entsprechend zwei Schenkelfedern 338. Grundsätzlich ist die Bereitstellung eines Verriegelungselements 330 und einer Schenkelfeder 338 ausreichend. Die in den Figuren gezeigte redundante Ausführung mit zwei Verriegelungselementen 330 und entsprechend zwei Schenkelfedern 338 gewährleistet jedoch eine sogenannte Ein-Fehlersicherheit.

### Ankoppelungsmechanismus (Ankoppelung und Abkoppelung)

Die Funktionalität und das Zusammenwirken und sowie Details der Ausgestaltung der diesbezüglichen Elemente des Ankopplungsmechanismus 300 werden nachfolgend im Zusammenhang mit dem Vorgang der Ankoppelung und Abkoppelung einer Hilfsantriebsvorrichtung 100 an einen Rollstuhl 500 erläutert.

Zunächst wird eine Ankoppelschelle 380 angebracht, vorzugsweise mittig zwischen den Hinterrädern 502R, 502L des Rollstuhls, an einer Achse 501 eines Rollstuhls 500 oder, falls der Rollstuhl 500 keine derartige Achse 501 aufweist, weil es sich beispielsweise um einen sogenannten Faltrollstuhl mit lateralem Faltmechanismus in Form von Kreuzstreben handelt, an einer entsprechenden Zusatzachse (nicht gezeigt), die für diesen Zweck bereitgestellt und an dem Rollstuhl befestigt werden kann. Die Befestigung der Ankoppelschelle 380 kann durch einen Klemmmechanismus erzielt werden.

Von spezieller Bedeutung ist die Höhe über der Fahrbahn, das heißt der Höhenabstand in Bezug auf die Aufstandsebene der Räder des Rollstuhls, die der Ankoppelstift beziehungsweise, bei redundanter Ausführung mit zwei Verriegelungselementen 330, die Ankoppelstifte dabei einnehmen. Diese Höhe beeinflusst die Fahrgeometrie der Hilfsantriebsvorrichtung 100 und damit das Fahrverhalten, insbesondere die Stellung der Lenkwelle 130, die idealerweise senkrecht zu der Aufstandsfläche des Rollstuhls verlaufen sollte. Einfluss auf die Höhe nehmen insbesondere der Durchmesser der Hinterräder 502R, 502L des Rollstuhls, die handelsüblich in Varianten von beispielsweise 24 Zoll (609,6 mm) oder 25 Zoll (635 mm) auf dem Markt sind, was in der Praxis, insbesondere in Abhängigkeit von der gewählten Bereifung zu effektiven Raddurchmessern von 595 mm bis 620 mm beziehungsweise 620 mm bis 645 mm führt, und der Anbringungsort einer Zusatzachse (nicht gezeigt).

Dem Fachmann stehen zahlreiche Möglichkeiten zu einer diesbezüglichen Einstellung zur Verfügung. Beispielsweise kann die Lenkgabel 131 in verschiedenen Längen bereitgestellt werden, es kann, im Sinne einer Variantenreduzierung, eine Gabel mit zwei oder mehr Lochpositionen verwendet werden oder eine geschlitzte Gabel, in die ein sogenannter "Flip-Chip" eingesetzt werden kann, der zwei oder mehr Anbauhöhen ermöglicht. Zudem kann der Höhe der Befestigung beispielsweis auch durch Varianten der Ankoppelschelle 380 Rechnung getragen und die korrekte Höhe des Ankoppelstifts 381 mit einer Lehre eingestellt und geprüft werden.

Ist eine Ankoppelschelle 380 an einem Rollstuhl 500 angebracht und ist der Ankoppelstift 381 oder sind die Ankoppelstifte 381 in der richtigen Höhe eingestellt, ist der Rollstuhl 500 zur Ankoppelung der Hilfsantriebsvorrichtung 100 bereit. Der Ankoppelungsmechanismus der Hilfsantriebsvorrichtung 100 befindet sich dabei zunächst in der in Fig. 24. gezeigten Ankoppel-Bereitschaftsstellung. In dieser Ankoppel-Bereitschaftsstellung nimmt das Verriegelungselement 330, beaufschlagt von der Kraft der Schenkelfeder 338 und begrenzt durch den Anschlag des Betätigungsstifts 314 in einem Winkel des diesbezüglich entsprechend ausgebildeten Kulissenfensters 331, eine Endstellung ein bezüglich eines Verschwenkens um die Mittelachse des Verriegelungselement-Lagerstifts 332 im Uhrzeigersinn, bezogen auf die Zeichenebene in den Darstellungen gemäß den Fig. 24 bis 26, die auch für nachfolgende diesbezügliche Richtungsangaben den Bezug darstellt.

In dieser Ankoppel-Bereitschaftsstellung kann durch den Handgriff 310 kein weiteres Verschwenken des Verriegelungselements 330 bewirkt werden. Der Handgriff 310 nimmt daher gegenüber dem Hilfsantriebsvorrichtung-Grundkörper eine insofern feste Lage ein, die es ermöglicht, dass die Hilfsantriebsvorrichtung 100 mittels des Handgriffs 310 angehoben und getragen werden kann, um sie so über dem Ankoppelstift 381 zu platzieren, dass dieser bei einem Absenken der Hilfsantriebsvorrichtung 100 in die Ankoppelnut 321 eintritt und hierbei das Verriegelungselement 330 durch Anlage an einer ersten Verriegelungselement-Anlauffläche 333 entgegen der Federkraft der Schenkelfeder 380 im Gegenuhrzeigersinn um die Mittelachse des Verriegelungselement-Lagerstifts 332 verschwenkt, wobei dieses Verschwenken durch eine entsprechende Ausgestaltung des Kulissenfensters 331 ermöglicht wird.

Bei vollständigem Eindringen des Ankoppelstifts 381 in die Ankoppelnut 321 gelangt der Ankoppelstift 381 in Anlage an einen dementsprechend ausgebildeten Boden der Ankoppelnut 321 und gibt dabei das Verriegelungselement 330 teilweise frei, so dass das Verriegelungselement infolge der Federkraft der Schenkelfeder 380 im Uhrzeigersinn um die Mittelachse des Verriegelungselement-Lagerstifts 332 so weit zurück verschwenkt, bis eine zweite Verriegelungselement-Anlauffläche 334 in Anlage mit dem Ankoppelstift 381 gelangt, wobei dieses Verschwenken durch eine entsprechende Ausgestaltung des Kulissenfensters 331 ermöglicht wird. Hierdurch wird der Ankoppelstift 381 formschlüssig in der Ankoppelnut 321 gehalten und die Hilfsantriebsvorrichtung 100 betriebsbereit und betriebssicher in der in Fig. 25 gezeigten Verriegelungs-Betriebsstellung des Ankoppelungsmechanismus 300 mit dem Rollstuhl 500 verkoppelt, wobei ein Ankippen des Rollstuhls 500 möglich ist.

Das Verriegelungselement so ausgebildet ist, das es beim Ankoppelvorgang, nämlich dann, wenn dieser abgeschlossen ist, federbelastet auf ein zum Bewirken der Ankopplung formschlüssig zu haltendes Bauteil auftrifft, das heißt in der hier beschriebenen Ausführungsform auf den Ankoppelstift 381. Dieses Auftreffen erzeugt ein metallisches Geräusch.

Bei der vorliegenden Ausführungsform wird dieses Prinzip dadurch verwirklicht, dass nach Freigabe des Verriegelungselements 330, wenn der Ankoppelstift 381 die erste Verriegelungselement-Anlauffläche 333 passiert hat, das Verriegelungselements 330 unter der Wirkung der Schenkelfeder 338 zurückschnappt, bis die zweite Verriegelungselement-Anlauffläche 334 auf den Ankoppelstift 381 auftrifft, wodurch ein metallisches Geräusch in Form eines Klickens oder Klackens erzeugt wird, das auf einfache Weise, ohne Bereitstellung zusätzlicher Bauteile, ein akustisches Feedback für den vollständigen und sicheren Ankopplungsprozess darstellt. Dies ist insbesondere dann von Vorteil, wenn der Ankopplungsvorgang von einer in dem Rollstuhl sitzenden Person durchgeführt wird, die aus dieser Stellung heraus nicht oder nur schwer eine optische Prüfung vornehmen kann.

Das Zusammenspiel der Schenkelfeder 338, des Verriegelungselements 330 und seiner geometrischen Ausgestaltung, insbesondere hinsichtlich des Schwenkpunktes um die Mittelachse des Verriegelungselement-Lagerstifts 332, des Kulissenfensters 331 und der beiden Verriegelungselement-Anlaufflächen 333 und 334 sowie der Ankoppelnut 321 ermöglicht eine sichere, spielfreie, Toleranzen und Verschleiß ausgleichende Dreipunktlagerung des Ankoppelstifts 381. Insbesondere in Verbindung mit einem eine Lenkwelle 130 aufweisenden Antriebssystem ist eine spielfreie Verbindung von Hilfsantriebsvorrichtung 100 und Rollstuhl 500 von besonderer Wichtigkeit.

Eine Tendenz des Ankoppelstifts 381, sich nach unten, das heißt zur Öffnung der V-förmigen Ankoppelnut 312 hin zu bewegen, bewirkt aufgrund der besagten geometrischen Ausgestaltung, insbesondere der Form und Orientierung der zweiten Verriegelungselement-Anlauffläche 334 in Bezug auf den Verlauf der Ankoppelnut 321 und die Lage des Schwenkpunktes des Verriegelungselements 330 um die Mittelachse des Verriegelungselement-Lagerstifts 332, dass sich das Verschwenkmoment des Verriegelungselements 330 um die Mittelachse des Verriegelungselement-Lagerstifts 332 im Uhrzeigersinn erhöht und die Klemmkraft weiter gesteigert wird. Hierdurch wird die Sicherheit gegen ein unbeabsichtigtes Abkoppeln weiter erhöht.

Ein gewolltes und von der Bedienperson durchgeführtes Abkoppeln der Hilfsantriebsvorrichtung 100 von dem Rollstuhl 500 wird dadurch bewirkt, dass der Handgriff 310 des Ankoppelungsmechanismus 300 nach oben gezogen und damit zusammen mit dem Kipphebel 311 um die Mittelachse des Kipphebel-Lagerstifts 312 im Uhrzeigersinn verschwenkt wird. Dies bewirkt, dass der Betätigungsstift 314 durch entsprechenden Eingriff in dem dementsprechend ausgestalteten Kulissenfenster 331 des Verriegelungselements 330 das Verriegelungselement 330 um die Mittelachse des Verriegelungselement-Lagerstifts 332 im Gegenuhrzeigersinn verschwenkt, so dass die Ankoppelnut 321 freigegeben wird. In der in Fig. 26 dargestellten Entriegelungsstellung kann die Hilfsantriebsvorrichtung dann mittels des Handgriffs 310 angehoben und von dem Rollstuhl 500 abgekoppelt werden. Die Kraftrichtungen zum Lösen der Verriegelung und zum Anheben der Hilfsantriebsvorrichtung zum Abkoppeln von dem Rollstuhl 500 mittels des Handgriffs 310 sind praktisch identisch, so dass der Entriegelungs- und Abkoppelungsvorgang flüssig mit einer einfachen Handbewegung bewirkt werden kann. Mit anderen Worten, die Betätigung des Handgriffs 310, die das Verriegelungselement 330 in die Entriegelungsstellung bewegt, weist die gleiche Kraftrichtung auf wie ein Tragen der Hilfsantriebsvorrichtung mittels des Handgriffs 310.

Beim Loslassen des Handgriffs 310 kehren dieser und das Verriegelungselement 330 durch die Kraft der Schenkelfeder 338 wieder in die Ankoppel-Bereitschaftsstellung gemäß Fig. 24 zurück.

### Anpassung und Einstellung des Bediensatelliten

Im Zusammenhang mit der Erläuterung des Aufbaus und der Funktion des Bediensatelliten 200 sind einzelne Merkmale einschließlich der einstellbaren Rastempfindlichkeit bereits angesprochen worden. Eine zusammenfassende Darstellung dieser Thematik wird nachfolgend gegeben.

Die Rastung beim Drehen des Dreh-Schaltrings 203 stellt ein akustisch wahrnehmbares Rastgeräusch und ein taktiles Feedback über die Hand der Bedienperson bereit mittels eines entsprechend ausgewählten Encoders, wie er beispielsweise von der Firma ELMA als Encoder Typ E33 bereitgestellt wird.

Softwareseitig kann bei einem derartigen Encoder die Empfindlichkeit des Rastweges des Dreh-Schaltrings 203 über ein Computerprogramm, beispielsweise über eine Smartphone App oder eine PC Service-Applikation, an die Bedürfnisse unterschiedlicher Benutzergruppen und deren Behinderungsausprägung individuell angepasst werden. So kann es wünschenswert sein, dass trotz großer Verstell Bewegung nur eine sehr geringe Geschwindigkeitsänderung erfolgt. Dies ist insbesondere bei Benutzern mit eingeschränkt koordinativen Fähigkeiten der Arme und Hände von Vorteil, da die Bewegungen grobmotorischer ausgeführt werden. Bei uneingeschränkter Feinmotorik und für geübte Benutzer kann es hingegen vorteilhaft sein, wenn bereits bei geringer Verstell Bewegung eine vergleichsweise große Geschwindigkeitsänderung erfolgt. Dies ist insbesondere bei Fahrten im Außenbereich sinnvoll, wo man schnell an seine Endgeschwindigkeit gelangen möchte. Beispielhafte Werte für ein "Rasten" (bzw. einen Klick) können der nachfolgenden Tabelle 1 entnommen werden.

| Geschwindigkeitsveränderung pro Rastung | Eingestellte Empfindlichkeit: |
|---|---|
| 0,1 km/h | Niedrig |
| 0,2 km/h | |
| 0,3 km/h | |
| 0,4 km/h | |
| 0,5 km/h | |
| 0,6 km/h | |
| 0,7 km/h | |
| 0,8 km/h | |
| 0,9 km/h | |
| 1,0 km/h | Hoch |

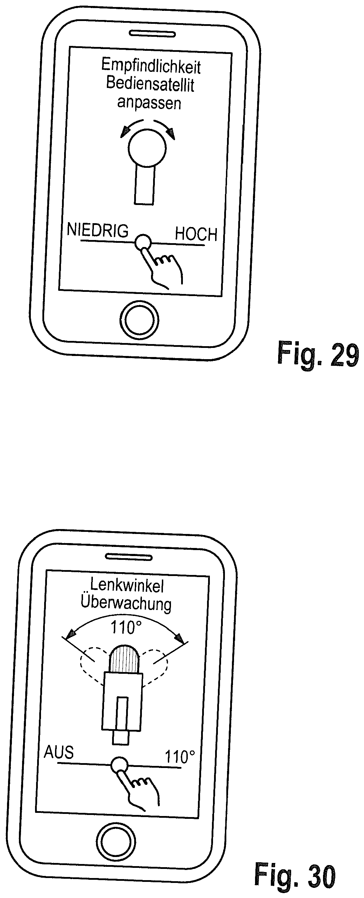

Fig. 29 zeigt eine Darstellung einer Bedienoberfläche eines Smartphones zur Einstellung der Empfindlichkeit des Dreh-Schaltrings 203 des Bediensatelliten 200. Mittels eines elektronischen Schiebereglers kann die Empfindlichkeit zwischen niedrig und hoch verstellt werden.

Einstellung der automatischen Anpassung der Kurvengeschwindigkeit Wie im Zusammenhang mit der Beschreibung des Aufbaus der Hilfsantriebsvorrichtung 100 ausgeführt, kann an der Lenkwelle 130 Hilfsantriebsvorrichtung 100 ein Sensor angebracht sein, welcher permanent den Lenkwinkel des Antriebsrades 110 überwacht.

Beispielsweise über ein Computerprogramm oder eine Smartphone App lässt sich dann einstellen, ab welchem Winkel die Antriebsleistung reduziert oder erhöht werden soll. Durch die Reduzierung der Antriebsleistung bei engen Kurvenfahrten, wird die Beherrschbarkeit und letztlich die Sicherheit erhöht, da die Kurvengeschwindigkeit automatisch reduziert wird. Besonders Rollstuhlfahrer mit höherer Querschnittslähmung und eingeschränkter Hand- und Fingerfunktion erhalten somit mehr Kontrolle über die Fahrleistung.

In beengten Umgebungsverhältnissen wie in Innenräumen, beispielsweise beim Ausweichen von Möbeln oder Gegenständen oder in stark frequentierten Fußgängerzonen sowie generell bei engen Kurvenradien, stellt die Winkelüberwachung eine zusätzliche Sicherheitsfunktion dar, da die Antriebsleistung bedarfsgerecht zurückgenommen wird. Erreicht der Lenkwinkel wieder niedrigere Werte bis hin zur Geradeausfahrt, wird die Antriebsleistung wieder gesteigert.

In einer weiteren Ausführungsform kann, als besondere Sicherheitsfunktion, der Antrieb auch vollständig abgeschaltet werden, sobald ein kritischer Lenkwinkel erreicht ist, beispielsweise dann, wenn ein Lenkwinkel von > 55° nach rechts oder links überschritten wird, was bei diesem Beispiel dann einen Gesamtschwenkbereich von in Summe 110° ergibt.

Um eine Programmierung derartiger Fahreigenschaften vorzunehmen, wird die Hilfsantriebsvorrichtung 100 über ein Bluetooth Modul mit einem Endgerät, beispielsweise einem Computer oder Smartphone, gekoppelt. Auf dem Endgerät ist zuvor die entsprechende Softwareapplikation für den Zusatzantrieb installiert worden. Wahlweise kann die Hilfsantriebsvorrichtung 100 auch über ein USB-Kabel mit einem Computer verbunden werden und so über die Kabelverbindung programmiert werden.

Fig. 30 zeigt beispielhaft eine Darstellung einer Bedienoberfläche eines Smartphones zur Einstellung der automatischen Anpassung der Kurvengeschwindigkeit in Abhängigkeit von einem Lenkwinkel eines Antriebsrades 110. Mittels eines elektronischen Schiebereglers kann die Winkelüberwachung ganz ausgeschaltet und bis zu einem Maximalwert von beispielsweise 110° eingestellt werden.

Es versteht sich, dass auf die gezeigte Weise auch andere Einstellungen und Ein- beziehungsweise Ausschaltvorgänge bewirkt werden können, beispielsweise das Ein- und Ausschalten der Rückleuchte 124. Zudem können mit einer derartigen App Betriebsparameter wie zum Beispiel der Ladezustand der Haupt-Batterie 121 und der Bediensatellit-Batterie auf dem Smartphone angezeigt werden.

Die Steuerungsfunktionen der beschriebenen Ausführungsformen machen Gebrauch von elektronischen Steuereinrichtungen, wobei diesbezügliche Bauteile insbesondere in dem Bediensatellit 200, dem Hilfsantrieb-Grundkörper 120 und dem Antriebsrad 110 angeordnet sind. Diese Steuerungsfunktionen sind durch Schaltungen implementierbar, die mindestens eine integrierte Halbleiterschaltung, wie zum Beispiel mindestens einen Prozessor (z. B. eine zentrale Verarbeitungseinheit (CPU)), mindestens eine anwendungsspezifische integrierte Schaltung (ASIC) und / oder mindestens ein feldprogrammierbares Gatter Array (FPGA), umfassen können. Mindestens ein Prozessor kann konfigurierbar sein, durch Lesen von Anweisungen von mindestens einem maschinenlesbaren, nicht transienten greifbaren Medium, um alle oder einen Teil der Steuerungsfunktionen ausführen zu können. Ein derartiges Medium kann mehrere Formen einnehmen, wie, aber nicht beschränkt auf, jede Art von magnetischen Medien, wie zum Beispiel eine Festplatte, jede Art von optischen Medien, wie zum Beispiel eine Compact Disc (CD) und eine Digital Video Disc (DVD), und jede Art von Halbleiterspeicher (d.h. Halbleiterschalter), wie zum Beispiel ein flüchtiger Speicher und nichtflüchtiger Speicher.

### - Bezugszeichenliste -

- 100: Hilfsantriebsvorrichtung
- 105: Lenkwelle-Drehwinkelsenor
- 110: Antriebsrad
- 111: Nabenmotor
- 112: Reifendecke
- 113: Radschrauben
- 118: Schleifring
- 120: Hilfsantriebsvorrichtung-Grundkörper
- 121: Haupt-Batterie
- 122: Rückleuchte
- 123: Hauptschalter
- 124: Grundkörper-Ladebuchse
- 130: Lenkwelle
- 131: Lenkgabel
- 132: Anschlaggleitelement-Führungselement
- 133: Langloch
- 134: Anschlaggleitelement
- 135: Anschlagelement
- 135A: Erste Seite Anschlagelement
- 135B: Zweite Seite Anschlagelement
- 200: Bediensatellit
- 201: Hinterschnitt
- 202: Bediensatellit-Schaltteil
- 203: Dreh-Schaltring
- 204: Druck-Schaltknopf
- 205: Anzeigeeinrichtung
- 205A: LED-Elemente weiß
- 205B: LED-Element RGB
- 206: Abdeckung
- 207: Fixierschraube
- 208: Greifstege
- 209: Entriegelungselement
- 210: Bediensatellit-Montageteil
- 211: Rasthaken
- 218: Adapter-Ladebuchse
- 219: Koppelungs-Tastknopf (Pairing Button)
- 220: Bediensatellit-Montageschwenkteil
- 221: Rastnasen
- 221A: Rastnasenstange
- 222: Fixierhaken
- 223: Ausklinkknopf
- 224: Schubstange
- 225: Druckfeder
- 226: Umlenkhebel
- 230: Rollstuhl-Montageteil
- 231: Montageschraube
- 232: Schraub-Klemm-Element
- 300: Ankoppelungsmechanismus
- 310: Handgriff
- 311: Kipphebel
- 312: Kipphebel-Lagerstift
- 313: Betätigungsstiftaufnahmebohrung
- 314: Betätigungsstift
- 320: Ankoppelungsmechanismus-Grundkörper
- 321: Ankoppelnut
- 330: Verriegelungselement
- 331: Kulissenfenster
- 332: Verriegelungselement-Lagerstift
- 333: erste Verriegelungselement-Anlauffläche
- 334: zweite Verriegelungselement-Anlauffläche
- 338: Schenkelfeder
- 380: Ankoppelschelle
- 381: Ankoppelstift
- 500: Rollstuhl
- 501: Achse
- 502L: Linkes Hinterrad
- 502R: Rechtes Hinterrad
- 504: Greifring
- 505: Vorderrad

## Patentansprüche

1. Hilfsantriebsvorrichtung (100) für einen Rollstuhl (500), aufweisend:
mindestens ein elektrisch antreibbares Antriebsrad (110) und
einen Ankoppelungsmechanismus (300) zur Ankoppelung der Hilfsantriebsvorrichtung (100) an dem Rollstuhl (500), wobei
der Ankoppelungsmechanismus (300) ein in diesem bewegbar gelagertes Verriegelungselement (330) aufweist, das eine Verriegelungsstellung einnehmen kann, in der es eine formschlüssige Verriegelung bewirkt, in welcher die Hilfsantriebsvorrichtung (100) mit dem Rollstuhl (500) verkoppelt ist, und
dass das Verriegelungselement (330) durch Betätigung eines Handgriffs (310) in eine Entriegelungsstellung bewegbar ist, in der ein Abkoppeln der Hilfsantriebsvorrichtung (100) von dem Rollstuhl (500) möglich ist,
wobei das Verriegelungselement (330) so ausgebildet ist, dass es federbelastet eine Ankoppelnut (321) ganz oder zumindest teilweise verschließen kann und beim Ankoppelvorgang federbelastet auf ein zum Bewirken der Ankopplung formschlüssig zu haltendes Bauteil (381) auftrifft, **dadurch gekennzeichnet, dass** die Ankoppelnut (321) in Bezug auf den Handgriff (310) so angeordnet ist, dass, wenn die Hilfsantriebsvorrichtung (100) mittels des Handgriffs (310) gehalten wird, der Ankoppelvorgang durch Absenken der Hilfsantriebsvorrichtung (100) erfolgt, wobei das zum Bewirken der Ankopplung formschlüssig zu haltendes Bauteil (381) ein Ankoppelstift umfasst und infolge des Absenkens in die Ankoppelnut (321) eintritt und der Ankoppelvorgang abgeschlossen ist, wenn der zum Bewirken der Ankopplung formschlüssig zu haltendes Ankoppelstift (381) in Anlage an einen dementsprechenden Boden der Ankoppelnut (321) gelangt ist, und
wobei der Ankoppelstift (381) und die Ankoppelnut (321) so ausgebildet sind, dass bei betriebssicherer Verkoppelung der Hilfsantriebsvorrichtung (100) mit dem Rollstuhl (500) ein Ankippen des Rollstuhls (500) möglich ist.

2. Hilfsantriebsvorrichtung (100) nach Anspruch 1, **dadurch gekennzeichnet, dass** der Handgriff (310) über einen Kipphebel (311) mit dem Verriegelungselement (330) verbunden ist.

3. Hilfsantriebsvorrichtung (100) nach Anspruch 1 oder 2, **dadurch gekennzeichnet, dass** die Betätigung des Handgriffs (310), die das Verriegelungselement (330) in die Entriegelungsstellung bewegt, die gleiche Kraftrichtung aufweist wie ein Tragen der Hilfsantriebsvorrichtung (100) mittels des Handgriffs (310).

4. Hilfsantriebsvorrichtung (100) nach einem der vorstehenden Ansprüche 1 bis 3, **dadurch gekennzeichnet, dass** der Ankoppelungsmechanismus (300) eine Ankoppel-Bereitschaftsstellung einnehmen kann, in der das Verriegelungselement (330) die Ankoppelnut (321) federbelastet ganz oder zumindest teilweise verschließt und vom offenen Ende der Ankoppelnut (321) her in Richtung Freigabe der Ankoppelnut (321) bewegt werden kann.

5. Hilfsantriebsvorrichtung (100) nach Anspruch 4, **dadurch gekennzeichnet, dass** in der Ankoppel-Bereitschaftsstellung eine auf den Handgriff (310) aufgebrachte Kraft keine Bewegung des Verriegelungselement (330) bewirkt.

6. Hilfsantriebsvorrichtung (100) nach einem der vorstehenden Ansprüche, **dadurch gekennzeichnet, dass** das elektrisch antreibbare Antriebsrad (110) frei verschwenkbar an einer Lenkwelle (130) gelagert und die Lenkwelle (130) so angeordnet ist, dass sich für das elektrisch antreibbare Antriebsrad (110) dann, wenn die Hilfsantriebsvorrichtung (100) betriebsbereit an einem Rollstuhl (500) angekoppelt ist, ein Nachlauf ergibt.

7. Hilfsantriebsvorrichtung (100) nach einem der vorstehenden Ansprüche, **dadurch gekennzeichnet, dass** die Antriebsfunktionen des elektrisch antreibbaren Antriebsrades (110) über einen an dem Rollstuhl (500) anbringbaren Bediensatellit (200) steuerbar sind, wobei der Bediensatellit (200) vorzugsweise einen Druck-Schaltknopf (204) zur Steuerung von insbesondere den Funktionen EIN und AUS und einen Drehschaltring (203) zur Aufnahme der Fahrt und Wahl der Fahrtgeschwindigkeit aufweist.

8. Hilfsantriebsvorrichtung (100) nach einem der vorstehenden Ansprüche, **dadurch gekennzeichnet, dass** sie mindestens einen Sensor (105) aufweist, mittels dessen bei Kurvenfahrt ein Kurvenradius ermittelt werden kann, und dass eine Leistungs- und Steuerungselektronik zur Steuerung der Funktionen der Hilfsantriebsvorrichtung (100) dahingehend ausgelegt ist, die Fahrtgeschwindigkeit in Abhängigkeit des Kurvenradius zu beeinflussen.

## Claims

1. Auxiliary drive device (100) for a wheelchair (500), comprising:
at least one electrically driven drive wheel (110) and
a coupling mechanism (300) for coupling the auxiliary drive device (100) to a wheelchair (500),
wherein
the coupling mechanism (300) includes a locking element (330) which is movably supported in the coupling mechanism, wherein the movable locking element can be in a locking position in which it causes locking in a positive-locking manner so that the auxiliary drive device (100) is coupled to the wheelchair (500) and
the locking element (330), by operation of a handle (310), can be moved in a release position in which uncoupling of the auxiliary drive device (100) from the wheelchair (500) is possible,
wherein the locking element (330) is designed such that, in a spring loaded manner, it can close a coupling groove (321) completely or at least partially and that in the process of coupling it contacts in a spring loaded manner an element to be held in a positive-locking manner for effecting the coupling (381),
**characterized in that**
the coupling groove (321) is arranged, with respect to the handle (310) such that, when the auxiliary drive device (100) is held by means of the handle (310), the coupling process is carried out by lowering the auxiliary drive device (100), wherein the element to be held in a positive-locking manner for effecting the coupling (381) comprises a coupling pin and enters, due to the lowering, into the coupling groove (321) and the coupling process is completed when the coupling pin (381) to be held in a positive-locking manner for effecting the coupling has come in abutment with a corresponding bottom of the coupling groove (321) and
wherein the coupling pin (381) and the coupling groove (321) are designed such that in case of a coupling of the auxiliary drive device (110) with the wheelchair (500) safe to operate a tilting of the wheelchair (500) is possible.

2. Auxiliary drive device (100) according to claim 1, **characterized in that** the handle (310) is connected to the locking element (330) via a rocker (311).

3. Auxiliary drive device (100) according to claim 1 or 2, **characterized in that** the operation of the handle (310) which moves the locking element (330) in the release position has the same direction of force as carrying the auxiliary drive device (100) by means of the handle (310).

4. Auxiliary drive device (100) according to any of the proceeding claims 1 to 3, **characterized in that** the coupling mechanism (300) can be in a coupling ready position in which the coupling element (330), in a spring loaded manner, closes the coupling groove (321) completely or at least partially and can be moved from the open end of the coupling groove (321) in the in the direction of unlocking the coupling groove (321).

5. Auxiliary drive device (100) according to claim 4, **characterized in that** in the coupling ready position a force applied to the handle (310) does not cause a movement of the locking element (330).

6. Auxiliary drive device (100) according to any of the proceeding claims, **characterized in that** the electrically driven drive wheel (110) is freely pivotable supported at a steering shaft (130) and the steering shaft (130) is arranged such that, when the auxiliary drive device (100) is coupled to a wheelchair (500) ready to be operated, a castor is provided for the electrically driven drive wheel (110).

7. Auxiliary drive device (100) according to any of the proceeding claims, **characterized in that** the drive functions of the electrically driven drive wheel (110) can be controlled via an operating satellite (200) which can be attached to a wheelchair (500) wherein the operating satellite (200) preferably has a push control knob (204) for controlling specifically the functions ON and OFF and a rotational control ring (203) for initiating drive and selection of the driving speed.

8. Auxiliary drive device (100) according to any of the proceeding claims, **characterized in that** at least one sensor (105) is provided by means of which upon driving of a curve a curve radius can be detected and that an electronic control unit for controlling functions of the auxiliary drive device (100) is adapted to influence the driving speed depending on the curve radius.

## Revendications

1. Mécanisme d'entraînement auxiliaire (100) pour un fauteuil roulant (500), comportant :
au moins une roue motrice (110) électriquement entraînable ainsi qu'un mécanisme d'accouplement (300) pour accoupler le mécanisme
d'entraînement auxiliaire (100) au fauteuil roulant (500),
dans lequel
le mécanisme d'accouplement (300) comporte un élément de verrouillage (330) monté de façon mobile dans ce premier et susceptible d'occuper une position de verrouillage dans laquelle il assure un verrouillage positif dans lequel le mécanisme d'entraînement auxiliaire (100) est accouplé au fauteuil roulant (500), et
à l'aide d'une poignée (310), l'élément de verrouillage (330) peut être amené dans une position de déverrouillage dans laquelle le mécanisme d'entraînement auxiliaire (100) peut être découplé du fauteuil roulant (500),
l'élément de verrouillage (330) est conçu de manière que, par sollicitation d'un ressort, il est capable d'obturer une rainure d'accouplement (321) entièrement ou au moins partiellement, en se heurtant, lors de l'opération d'accouplement, par sollicitation d'un ressort, à un composant (381) qui doit être maintenu en engagement positif pour assurer l'accouplement,
**caractérisé en ce que**
la rainure d'accouplement (321) est disposée par rapport à la poignée (310) de telle sorte que lorsque le mécanisme d'entraînement auxiliaire (100) est porté grâce à la poignée (310), l'opération d'accouplement se fait par abaissement du mécanisme d'entraînement auxiliaire (100), le composant (381) prévu d'être maintenu en engagement positif pour permettre l'accouplement comprend une goupille d'accouplement, pénétrant dans la rainure d'accouplement (321) par suite de l'abaissement, l'opération d'accouplement étant achevée lorsque la goupille d'accouplement (381) à maintenir en engagement positif pour permettre l'accouplement est venue en butée à un plancher correspondant de la rainure d'accouplement (321), et **en ce que**
la goupille d'accouplement (381) et la rainure d'accouplement (321) sont conçues de manière que lorsque le mécanisme d'entraînement auxiliaire (100) et le fauteuil roulant (500) sont fiablement accouplés l'un à l'autre, le fauteuil roulant (500) peut être incliné.

2. Mécanisme d'entraînement auxiliaire (100) selon la revendication 1, **caractérisé en ce que** la poignée (310) est reliée à l'élément de verrouillage (330) grâce à un levier basculant (311).

3. Mécanisme d'entraînement auxiliaire (100) selon la revendication 1 ou 2, **caractérisé en ce que** l'action de la poignée (310) amenant l'élément de verrouillage (330) en position de déverrouillage, présente la même direction de force que le transport du mécanisme d'entraînement auxiliaire (100) grâce à la poignée (310).

4. Mécanisme d'entraînement auxiliaire (100) selon une des revendications précédentes 1 à 3, **caractérisé en ce que** le mécanisme d'accouplement (300) peut occuper une position d'attente d'accouplement dans laquelle l'élément de verrouillage (330) obture entièrement ou au moins partiellement la rainure d'accouplement (321) par sollicitation d'un ressort, tout en pouvant être déplacé depuis l'extrémité ouverte de la rainure d'accouplement (321) vers la libération de la rainure d'accouplement (321).

5. Mécanisme d'entraînement auxiliaire (100) selon la revendication 4, **caractérisé en ce que**, en position d'attente d'accouplement, une force exercée sur la poignée (310) n'entraîne point le déplacement de l'élément de verrouillage (330).

6. Mécanisme d'entraînement auxiliaire (100) selon une des revendications précédentes, **caractérisé en ce que** la roue motrice électriquement entraînable (110) est montée sur un arbre de direction (130) de manière à pouvoir pivoter librement, l'arbre de direction (130) étant disposé de manière que la roue motrice (110) électriquement entraînable marche par inertie lorsque le mécanisme d'entraînement auxiliaire (100) est accouplé de manière opératoire à un fauteuil roulant (500).

7. Mécanisme d'entraînement auxiliaire (100) selon une des revendications précédentes, **caractérisé en ce que** les fonctions d'entraînement de la roue motrice (110) électriquement entraînable sont commandables via un satellite de commande (200) qui peut être monté sur le fauteuil roulant (500), le satellite de commande (200) comportant de préférence un bouton-poussoir de commande (204) pour commander notamment les fonctions MARCHE et ARRET ainsi qu'une bague de commande rotative (203) pour le démarrage et le choix de la vitesse de roulement.

8. Mécanisme d'entraînement auxiliaire (100) selon une des revendications précédentes, **caractérisé en ce qu'**il comporte au moins un capteur (105) permettant de déterminer un rayon de courbe pendant un virage, et qu'un mécanisme électronique contrôlant la puissance et la commande pour commander les fonctions du mécanisme d'entraînement auxiliaire (100) est configuré pour jouer sur la vitesse de roulement en fonction du rayon de courbe.
